(19) **Europäisches Patentamt**
**European Patent Office**
**Office européen des brevets**

(11) **EP 1 165 186 B1**

(12) **EUROPÄISCHE PATENTSCHRIFT**

(45) Veröffentlichungstag und Bekanntmachung des Hinweises auf die Patenterteilung:
**21.02.2007 Patentblatt 2007/08**

(21) Anmeldenummer: **00920508.9**

(22) Anmeldetag: **17.03.2000**

(51) Int Cl.:
*A62B 9/00* (2006.01)     *G01N 33/00* (2006.01)

(86) Internationale Anmeldenummer:
**PCT/EP2000/002371**

(87) Internationale Veröffentlichungsnummer:
**WO 2000/054840 (21.09.2000 Gazette 2000/38)**

(54) **VERFAHREN UND SENSORVORRICHTUNG ZUR DETEKTION VON IN LUFT ENTHALTENEN GASEN ODER DÄMPFEN**

METHOD AND SENSOR DEVICE FOR DETECTING GASES OR FUMES IN AIR

PROCEDE ET DISPOSITIF CAPTEUR POUR LA DETECTION DE GAZ OU DE VAPEURS CONTENUS DANS L'AIR

(84) Benannte Vertragsstaaten:
**DE FR GB**

(30) Priorität: **17.03.1999 DE 19911867**
**17.03.1999 DE 19911869**

(43) Veröffentlichungstag der Anmeldung:
**02.01.2002 Patentblatt 2002/01**

(73) Patentinhaber: **T.E.M.! Technische Entwicklungen und Management GmbH**
**63840 Hausen (DE)**

(72) Erfinder:
• **RUMP, Hanns**
**D-63840 Hausen (DE)**
• **KIESEWETTER, Olaf**
**D-98716 Gschwenda (DE)**
• **KLEIN, Rainer**
**D-58239 Schwerte (DE)**
• **SUPPLY, Carsten**
**D-44149 Dortmund (DE)**
• **SCHOCKENBAUM, Heinz-Walter**
**D-59425 Unna (DE)**
• **VOSS, Wolfgang**
**D-58638 Iserlohn (DE)**
• **GERHART, Jessica**
**D-63840 Hausen (DE)**

(74) Vertreter: **Mierswa, Klaus Rechtsanwalt + Patentanwalt, Friedrichstrasse 171 68199 Mannheim (DE)**

(56) Entgegenhaltungen:
EP-A- 0 293 255     EP-A- 0 343 521
EP-A- 0 779 170     WO-A-96/12523
WO-A2-88/07678     DE-A- 4 412 447
GB-A- 2 088 559     US-A- 3 950 739
US-A- 4 338 281     US-A- 4 873 970

**Beschreibung**

Technisches Gebiet:

Die Erfindung betrifft ein Verfahren zum Betreiben eines Sensorelementes zur Detektion von in Luft enthaltenen Gasen oder Dämpfen, welches eine gassensitive Schicht aufweist und mittels einer Heizstruktur elektrisch beheizbar ist, wobei die Temperatur des Sensorelementes geregelt wird, und der Temperatursollwert in Abhängigkeit von der Größe oder dem zeitlichen Verhalten des Sensorsignals mittels einer Störgrößenaufschaltung zumindest zeitweise verändert wird, gemäß dem Oberbegriff des Anspruchs 1.

Stand der Technik: Für den Aufbau von Gas-Sensorsystemen und insbesondere für die sensortechnische Überwachung von Atemschutzmasken sind u.a. folgende Druckschriften bekannt: DE 3 613 512; EP 0 447 619; EP 0 535 385; GB 2 266 467; DE 4 132 680; EP 0 410 071; EP 0 343 521; WO 9612523. Die dem Stand der Technik entnehmbare Lehre benutzt unterschiedliche Sensor-Technologien:

1. Elektrochemische Zellen: Nachteilig beim Einsatz elektrochemischer Gasdetektionszellen ist, dass diese Zellen mehr oder weniger selektiv auf einige Gase reagieren. Die Anwendung dieser Zellen setzt daher voraus, dass im Wesentlichen nur ein Gas detektiert werden muss, welches zudem bekannt sein muss. In der Praxis wird als nachteilig bewertet, dass bei verschiedenen potentiellen gefährlichen Gasen (z.B. in der chemischen Industrie) diese Methode auf Grund dieser Beschränkung fragwürdig ist. Im Übrigen ist die Lebensdauer elektrochemischer Zellen begrenzt. Die Zellen sind sehr teuer.

2. Farbumschlagsreaktionen, wie sie aus den im Handel befindlichen Prüfröhrchen bekannt sind. Ein Nachteil dieser Sensorik ist ihre starke Selektivität. Dies setzt voraus, dass man die zu überwachenden Gase kennt. Ein weiterer Nachteil ist, dass die zur Farbumschlagsdetektion verwendeten chemischen Reaktionen häufig nicht reversibel sind, es handelt sich also um Einwegsensoren, die vor jedem Einsatz speziell ausgewählt werden müssen und anschließend nicht wieder verwendet werden können.

3. Metall-Oxid-Sensoren nach dem Taguchi-Prinzip: Der Vorteil dieser Sensoren ist, dass sie auf alle gas- und dampfförmigen Substanzen in der Luft reagieren, die oxidierbar oder reduzierbar sind. Je nach Zusammensetzung der gassensitiven Schicht wird durch oxidierbare Substanzen z.B. der elektrische Widerstand verringert. Reduzierbare Substanzen erhöhen in diesem Fall den elektrischen Widerstand. Der Nachteil ist, dass die Sensoren beheizt werden müssen, was Energie verbraucht und dem Betrieb des Sensorsystems mit Batterien enge Grenzen setzt. Ein weiterer Nachteil ist die erhebliche Drift des Sensorwertes in Normalluft, z.B. wenn sich die Lufttemperatur und/ oder die Luftfeuchte ändern.

Jeder Taguchisensor weist als gassensitive Schicht einen elektrischen Halbleiter auf. Alle Halbleiter ändern z.B. ihren Widerstand u.a. mit der Temperatur. Zusätzlich ändern sich mit der Temperatur die Reaktionsgeschwindigkeit und Empfindlichkeit des Sensorelementes in Bezug auf die Zielgase, so dass sich die Kennlinien gegenüber den verschiedenen Gasen bei unterschiedlichen Temperaturen erheblich voneinander unterscheiden können. Aus diesen Gründen ist es notwendig, die Temperatur der gassensitiven Halbleiterschicht in engen Grenzen stabil zu halten.

Selbst wenn die Temperatur der Heizstruktur völlig konstant gehalten werden könnte, wäre damit trotzdem keine unter allen Umständen konstante Temperatur der gassensitiven Schicht erreichbar, weil der Temperaturgradient zwischen dieser und der umgebenden Luft sehr groß ist und durch die vom Sensorelement durch Strahlung und konvektiv abgegebenen Wärme beeinflusst wird. Die vom Sensorelement an die Umgebung abgegebene Wärmeenergie ist zum einen eine Funktion des Temperaturgradienten, andererseits eine Funktion der Strömungsgeschwindigkeit der Luft relativ zum Sensorelement.

Daher wird man trotz aufwendiger elektronischer Regelungen in der Praxis immer erhebliche Schwankungen des Sensorwiderstandes in Normalluft feststellen, was in der Vergangenheit den Einsatz von Halbleitersensoren erheblich eingeschränkt hat, da der Grundwiderstand der gassensitiven Schicht mit der Temperatur massiv schwankt.

Es ist bekannt, Sensorsignale derart auszuwerten, dass die aktuellen Signale des Sensors mit einem über eine bestimmte Zeit gebildeten Mittelwert vorausgegangener Sensorsignale verglichen werden. D.h., es wird die Differenz zwischen aktuellem Signal und Mittelwert ausgewertet. Beispielsweise kann ein Schaltsignal ausgelöst werden, wenn der Betrag dieser Differenz einen bestimmten Wert übersteigt.

Treten plötzlich Ereignisse auf, auf die der Sensor anspricht, lassen sich diese mit dieser Methode sehr gut detektieren. Langsame und/oder nur kleine Änderungen des Sensorwiderstandes führen dagegen zu keinen Auswertungen bzw. Schaltsignalen.

Langsame Änderungen des aktuellen Sensorsignals, die entweder durch ein Driftverhalten des Sensors selbst oder aber durch eine Änderung der Konzentration einer Dampf- oder Gasbeimengung in der Umgebungsluft verursacht sein können, werden ignoriert.

Hingegen wird beim Auftreten von plötzlichen Konzentrationserhöhungen oxidierbarer Gase in der Umgebungsluft zuverlässig ein Schaltsignal generiert.

In vielen Fällen ist es aber sehr wichtig, dass auch ein langsamer Anstieg von Gaskonzentrationen sicher detektiert wird. Dies ist z.B. wichtig bei der Überwachung von Atemschutzmasken, weil z.B. bei der Sättigung des Filters dieser typisch nicht plötzlich seine Funktion verliert, sondern die Abscheideleistung des Filters meistens schleichend schlechter wird. Auch könnte sich die Konzentration toxischer Gase sehr langsam erhöhen, was auf jeden Fall detektiert werden muss. Die oben erläuterte Methode der Signalauswertung kann aus den erwähnten Gründen hierfür nicht ohne weiteres angewandt werden.

Durch die WO 88/07678 ist eine Schaltungsanordnung zur Auswertung der von einem Halbleitergassensor erzeugten Signale zur Auswertung der von einem Halbleitergassensor erzeugten Signale für die Steuerung der Umluftklappen in Kraftfahrzeugen oder deren Klimaanlagen bekannt geworden. Dabei bildet der Schadstoffsensor einen Spannungsteiler mit einer Stromquelle, wobei der Strom der Stromquelle in Abhängigkeit von einer Steuerspannung einstellbar ist, die ihrerseits aus der sich ergebenden Sensorspannung mit Hilfe eines Integrators gebildet wird. Das sich ergebende Sensorsignal wird einmal auf den Eingang eines Komparators, zum anderen über eine Integrationsschaltung geführt, so dass am Ausgang dieser Integrationsschaltung ein integriertes Sensorsignal erscheint. Bei konstanter Sensorspannung wird nach einiger Zeit diese Integrationsspannung identisch sein, welche als Störgrößenaufschaltung auf die Konstantstromquelle gegeben wird, wobei die Wirkrichtung so ist, dass sich der Konstantstrom immer dann erhöht, wenn die Integrationsspannung kleiner als ein vorgegebener Betrag ist. Dadurch wird erreicht, dass sich das System bemüht, die Sensorspannung auf einem bestimmten Pegel zu halten. Erfahrungsgemäß sind die Änderungen im Straßenverkehr impulsartige Schadstoffspitzen, die vorwiegend in Situationen, wie Ampelstau, Tunnel, Tiefgarage usw. auftreten. Langfristige Einflüsse (Ortsbelastung, Temperatur, Feuchte) ändern sich dagegen äußerst langsam. Wenn die Integrationszeit des Integrators deutlich größer ist als die Zeit, in der üblicherweise Schadstoffbelastungsspitzen auftreten, erkennt der Komparator die Schadstoffspitzen und schaltet, wobei der Schaltpunkt über einen Einsteller gewählt werden kann.

Der derzeitige Stand der Technik gibt keine brauchbare Lehre an, wie trotz der offenkundigen Stabilitäts-Nachteile der Taguchi-Sensoren diese in Applikationen genutzt werden können, in welchen Sicherheit gegenüber Fehlalarm und die gleichzeitige Fähigkeit zur Detektion auch kleiner Konzentrationen und/oder kleiner Konzentrationsänderungen gefordert wird.

Atemschutzmasken werden u.a. zum Schutz vor dampf- oder gasförmigen und gesundheitsgefährdenden Verunreinigungen der Atemluft verwendet. In den meisten Fällen handelt es sich dabei um Schutzmasken, die das gesamte Gesicht bedecken. Die Atemluft wird durch auswechselbare Filterpatronen gefiltert. Die Filterwirkung beruht in der Regel auf Adsorptionsprozessen an Aktivkohle. Die Aktivkohle der Filterpatronen ist den Erfordernissen entsprechend modifiziert und wird durch zusätzliche Staubfilter ergänzt. Die Abdichtung der Maske an der Gesichtskontur erfolgt über flexible Dichtlippen an der Maske. Die Trennung von Zuluft (Einatmen) und Abluft (Ausatmen) erfolgt in der Regel über Klappenventile, die den Maskeninnenraum in der Luftführung in zwei Bereiche trennen, den Mund/Nasenraum, der durch die inneren Halbmaske gebildet wird, und den Augenraum. Der Augenraum ist dabei frei von Abluft und wird bestimmungsgemäß nur von gefilterter Frischluft durchströmt, von dort gelangt die Frischluft beim Einatmen über Klappenventile in der Trennwand zwischen den beiden Bereichen in den Mund/Nasenraum. Beim Ausatmen werden diese Ventile durch den entstehenden Überdruck geschlossen und die Abluft gelangt über zusätzliche Ventile nach außen.

Eine ordnungsgemäße Funktion vorausgesetzt, kann eine solche Schutzmaske den Träger eine begrenzte Zeit vor der gesundheitsgefährdenden Wirkung von Luftverunreinigungen schützen. Je nach Konzentration der Schadstoffe sind die Filterpatronen aber nach einiger Zeit erschöpft und lassen in Ihrer Filterwirkung nach. Dieses Nachlassen in der Filterwirkung erfolgt allerdings nicht plötzlich, sondern je nach Konzentration langsam ansteigend. Entsprechendes ergibt sich für die Schadstoffkonzentration in der Zuluft (Atemluft). Die Filter-/Maskenhersteller empfehlen in Ihren Gebrauchsanweisungen den Filter zu wechseln, "wenn über Geruch oder Geschmack ein Nachlassen der Filterwirkung festgestellt wird". Dieses Verfahren ist, wenn nicht gar menschenverachtend, zumindest äußerst bedenklich, da insbesondere bei langsamen Nachlassen der Filterwirkung das Adaptionsverhalten des Geruchssinns dazu führt, dass gesundheitsgefährdende Schadstoffkonzentrationen innerhalb der Maske erst sehr spät wahrgenommen werden können. Zudem sind einige toxische Gase wie z.B. Kohlenstoffmonoxid (CO) geruch- und geschmacklos, so dass diese nicht wahrgenommen werden können, sondern erst anhand ihrer toxischen Wirkung auf den menschlichen Organismus erkannt werden. Dies kann aber bereits zu ernsthaften gesundheitlichen Schäden oder sogar zum Tod führen. Ein weiteres wesentliches Problem stellt die Abdichtung der Maske mit Hilfe der Dichtlippe an der Gesichtskontur dar. Es werden zwar verschiedene Maskengrößen angeboten, dennoch ist eine zuverlässige Abdichtung bedingt durch die unterschiedlichsten Gesichtsformen nicht immer gewährleistet. Dies wird bei Bartträgern noch zusätzlich erschwert.

Recherchen haben ergeben, dass es keine verwertbaren Statistiken zu Unfällen, Gesundheitsschäden oder Todesfällen gibt, welche auf nicht ordnungsgemäß funktionierende Atemschutzmasken zurückzuführen sind. Auf Grund der geschilderten Sachverhalte und der Forderungen der Berufsgenossenschaften und Institutionen zum Arbeitsschutz kann davon ausgegangen werden, dass der persönliche und der volkswirtschaftliche Schaden, der durch die Folgen nicht-bestimmungsgemäß funktionierender Atemschutzmasken verursacht ist, sehr groß ist.

Es besteht also die Notwendigkeit eines Überwachungssystems, welches das Eindringen von Schadstoffen in den Zuluftbereich der Atemschutzmaske zuverlässig anzeigt und damit den Nutzer vor gesundheitlichen Risiken schützt.

Es gibt zahlreiche Vorschläge einer technischen Lösung, welche aber in der Regel technisch unzureichend sind, Bisher ist jedenfalls keines der vorgeschlagenen Systeme am Markt erhältlich, obwohl eine dringende Nachfrage besteht.

In US4873970 wird eine Lösung vorgeschlagen, bei der eine Warneinrichtung mit einer elektrochemischen Zelle in einem Gehäuse zwischen Filter und Maske angebracht wird. Eine wesentlicher Nachteil dieses Lösungsansatzes ist die Tatsache, dass nur die toxischen Gase erfasst werden können, die über den Filter in die Atemluft gelangen. Undichtigkeiten der Maske, insbesondere an der kritischen Dichtfläche zwischen Maske und Gesichtskontur können nicht erkannt werden.

Nachteilig beim Einsatz elektrochemischer Gasdetektionszellen ist, dass diese Zellen in der Regel selektiv nur auf einzelne Gase reagieren. Die Anwendung dieser Zellen setzt daher voraus, dass im Wesentlichen nur ein Gas detektiert werden muss, welches zudem bekannt sein muss. In der Praxis wird als nachteilig bewertet, dass bei verschiedenen potentiellen gefährlichen Gasen (z.B. in der chemischen Industrie) diese Methode auf Grund dieser Beschränkung fragwürdig ist. Im übrigen ist die Lebensdauer elektro- chemischer Zellen begrenzt. Die Zellen sind sehr teuer.

In EP0447619 wird eine analoge Warneinrichtung wie in US4873970 angegeben der Erfindung liegt im wesentlichen die Aufgabe zugrunde, dem Geräteträger auch bei Lärm und schlechter Sicht den Erschöpfungszustand des Gasfilters anzuzeigen. Erfindungsgemäß wird dies dadurch gelöst, dass durch eine entsprechende Vorrichtung bei Erschöpfung des Filters der Atemwiderstand spürbar erhöht wird und somit der Geräteträger aufmerksam gemacht wird.

Neben den für US4873970 angegebenen Nachteilen kommt in EP0447619 zusätzlich hinzu, dass der durch den erschöpften Filter ohnehin schon mit Schadstoffen belastete Geräteträger noch zusätzlich mit einem erhöhten Atemwiderstand belastet wird. Da aber neben den durchbrechenden Schadstoffen aber auch lebensnotwendiger Sauerstoff durch die Widerstandserhöhung in geringerem Maße aufgenommen wird und der Geräteträger unter Umständen noch einen weiten Weg zurückzulegen hat, um den schadstoffbelasteten Bereich sicher zu verlassen oder das Filter zu wechseln, bedeutet die Erhöhung des Atemwiderstandes ein zusätzliches Risiko, das unter allen Umständen zu vermeiden ist.

In EPO535395 wird eine Lösung angegeben, bei der eine Überwachung sowohl des Filters als auch einer allgemeinen Undichtigkeit der Maske erfolgt, Dies wird dadurch erreicht, dass ein Farbumschlagsindikator auf der inneren Halbmaske angebracht wird. Hierdurch wird erreicht, dass die gesamte inhalierte Luft den Sensor passieren muss. Als Indikator ist eine Scheibe mit einem Farbumschlagsindikator vorgesehen. Farbumschlagsindikatoren haben jedoch den Nachteil, dass wiederum im voraus bekannt sein muss welches Gas detektiert werden soll. Zudem handelt es sich dabei um nicht-reversible Reaktionen die eine Mehrfachverwendung ausschließen. Entsprechendes gilt für den in GB2266467 angegebenen Lösungsvorschlag.

Die in EP0343531 und W09612523 angegebenen Lösungsvorschläge sind ebenfalls lediglich in der Lage ein erschöpftes Filter anzuzeigen. Undichtigkeiten in der Maske oder in der Dichtfläche zum Gesicht können nicht erkannt werden.

Aus der DE 44 12 447 A1 ist eine Sensoranordnung zur Detektion explosionsgefährdeter Gase mit einem Sensorelement bekannt, welches sich in einem Gehäuse befindet. Das Gehäuse besitzt eine mit einem gasdurchlässigen Filter versperrte Zutrittsöffnung, wobei das Filter mindestens eine Lage aus Aktivkohle aufweist. Als Sensoren kommen vorzugsweise Taguchi-Sensoren oder Pellistoren-Sensoren zum Einsatz. Die Signalauswertung erfolgt unter Verwendung einer Auswerteschaltung und vorzugsweise eines Mikroprozessors. Zum Zwecke der Überwachung der einwandfreiem Funktion des Sensorelements wird dessen Heizleistung zu bestimmten Zeiten, z.B. einmal täglich, vorübergehend über die normale Leistung hinaus erhöht und zu anderen bestimmten Zeiten vorübergehend unter die normale Leistung abgesenkt.

Durch die US-A-4 873 870 ist eine Warnvorrichtung bekannt geworden, welche in der Lage ist, die Erschöpfung eines Gasfilters zu melden. Die Warnvorrichtung umfasst ein Gehäuse, in dem sich eine elektrochemische Zelle befindet, ein Warnmittel, welches z.B. eine Leuchtdiode aufweist, und ein Mittel zur Aktivierung des Warnmittels. Dabei wird vorgeschlagen, die Warnvorrichtung in Verbindung mit einer Gesichtsmaske zu betreiben.

Technische Aufgabe:

Der Erfindung liegt deshalb Aufgabe zugrunde, ein Verfahren zur Detektion von in Luft, insbesondere in der Atemluft, enthaltenen Gasen oder Dämpfen mit hoher Sicherheit gegen Fehlalarm bereitzustellen, wobei auch kleine Konzentrationen und/oder kleine Konzentrationsänderungen detektierbar sind, sowie eine Atemschutzmaske mit Sensor-Mikrosystem anzugeben, mit dem die meisten im Handel befindlichen Masken nachrüstbar sind, wobei mit nur einem integriertem Sensor-Mikrosystem die am häufigsten vorkommenden Schadstoffe, z.B. Dämpfe organischer Lösungsmittel (VOC), Kohlenstoffmonoxid (CO) Schwefeldioxid (S02) Ammoniak (NH3), und weitere zuverlässig detektiert werden können, neben der Erschöpfung des Filters auch jede Undichtigkeit der Maske erkannt und dem Träger signalisiert werden, das Sensor-Mikrosystem zum Zwecke der Reinigung der Maske leicht entfernt und wieder montiert werden kann.

Offenbarung der Erfindung und deren Vorteile:

Die Aufgabe wird bei einem Verfahren der eingangs genannten Gattung dadurch gelöst, dass die Temperatur der gassensitiven Schicht nicht konstant gehalten wird, sondern in Abhängigkeit vom zeitlichen Verhalten des Sensorsignals eine die Temperatur der gassensitiven Schicht erhöhende Störgrößenaufschaltung so erfolgt, dass anhand des zeitlichen Verhaltens des Sensorsignals solche Störeinflüsse, welche durch Änderungen der physikalischen Umgebungsbedingungen verursacht sind, von solchen Einflüssen, welche durch eine Änderung der Gaszusammensetzung oder Gaskonzentration verursacht sind, unterscheidbar sind und mittels der Störgrößenaufschaltung die Heizleistung durch das Sensorsignal kurzzeitig so beeinflusst wird, dass eine Änderung des Sensorsignals, welche durch eine Änderung der Luftfeuchte oder einer Änderung der Lufttemperatur verursacht wird, schneller und/oder in einem stärkeren Ausmaß kompensiert wird als eine Änderung des Sensorsignals, welche durch eine Änderung der Gaskonzentration verursacht wird.

Das erfindungsgemäße Verfahren und die Sensorvorrichtung sind vorteilhaft in einer erfindungsgemäßen Atemschutzmaske einsetzbar, welche sehr vorteilhaft mit dem erfindungsgemäße Verfahren und der Sensorvorrichtung betrieben werden kann.

Anwendungen sind u.a. der Schutz von Menschen, die Atemschutz-Ausrüstungen (z.B. Atemschutz-Masken) benutzen. Eine weitere Anwendung besteht in der Überwachung von Klima- und Lüftungsanlagen in Bezug auf die (unerwünschte) Anwesenheit von Gasen und Dämpfen. Weiter kann mit erfindungsgemäßen Gasdetektoren die Lüftung von Fahrzeugen derart gesteuert werden, dass die Lüftung unterbrochen wird, wenn außerhalb des Fahrzeuges Gaskonzentrationen detektiert wird. Weiter kann mit erfindungsgemäßen Gasdetektoren die Lüftung von Räumen oder Gebäuden bedarfsgerecht derart erfolgen, dass die Lüftungsrate an die Konzentration z.B. organischer Luftinhaltsstoffe (Gase, Dämpfe) gekoppelt ist. Weiter kann mit den erfindungsgemäßen Gasdetektoren die Überwachung der Luft in Hinblick auf zündfähige bzw. explosionsgefährdete Gas-Luftgemische erfolgen.

Der in dieser Erfindung angegebene Sensor der Sensorvorrichtung ist ein Taguchi-Sensor, der - wie jeder Taguchisensor - als gassensitive Schicht einen elektrischen Halbleiter aufweist.

Aus diesem Grunde ist es notwendig, die Temperatur der gassensitiven Halbleiterschicht in engen Grenzen stabil zu halten. Zu diesem Zweck sind bereits Temperatur-Regelungen von Sensoren bekannt, wobei einige nutzen die Tatsache ausnutzen, dass die Sensoren Heizungsstrukturen aus Platin oder einem anderen Material mit ausgeprägtem Temperatur-Koeffizienten aufweisen. Dem Fachmann sind Methoden bekannt, wie derartige Heizer so angesteuert werden können, dass der Widerstand des Heizers als IST-Referenz eingesetzt wird.

Das Sensorelement weist ein Sensorsubstrat, eine gassensitive Schicht und eine zwischen diesen angeordnete Heizstruktur auf. Die Heizstruktur wird elektrisch über einen Aussenwiderstand angesteuert, welcher so dimensioniert ist, dass der Stromfluss das Sensorelement keinesfalls auf die Soll-Temperatur aufheizen wird. Vielmehr wird periodisch von einem zentralen Steuer- und Regelgerät, vorteilhaft als Mikrocontroller ausgebildet, über eine Steuerleitung ein Impuls auf einen Schaltbaustein gegeben, welcher einen energiereichen Schaltimpuls an die Heizstruktur abgibt. Außenwiderstand und Heizstruktur bilden einen Spannungsteiler.

Nach Abschalten dieses Impulses wird diejenige Spannung über einen ersten A/D-Wandler gemessen, die am Spannungsteiler zwischen Heizstruktur und Außenwiderstand abgegriffen wird.

Ist die Spannung zu hoch, wird bei den nächsten Perioden der Heizimpuls oder die Anzahl der Heizimpulse verkürzt. Sollte die Spannung hingegen zu klein sein, wird bei den nächsten Perioden der Heizimpuls oder die Anzahl der Heizimpulse verlängert.

Die Impedanz der gassensitiven Schicht des Sensorelementes wird mit dem zentralen Steuer- und Regelgerät, geeigneter Software und einem zweiten A/D-Wandler, der an die gassensitive Schicht angeschlossen ist, gemessen und steht damit als Signal zur Auswertung zur Verfügung. Im einfachsten Fall wird hierbei lediglich der ohmsche Widerstand gemessen.

Selbst wenn die Temperatur der Heizstruktur völlig konstant wäre, kann damit trotzdem keine unter allen Umständen konstante Temperatur der gassensitiven Schicht erreicht werden, weil der Temperaturgradient zwischen dieser und der umgebenden Luft sehr groß ist und durch die vom Sensorelement durch Strahlung und konvektiv abgegebenen Wärme beeinflußt wird. Die vom Sensorelement an die Umgebung abgegebene Wärmeenergie ist zum einen eine Funktion des Temperaturgradienten, andererseits eine Funktion der Strömungsgeschwindigkeit der Luft relativ zum Sensorelement.

Daher wird man trotz aufwendiger elektronischer Regelungen in der Praxis immer erhebliche Schwankungen des Sensorwiderstandes in Normalluft feststellen, was in der Vergangenheit den Einsatz von Halbleitersensoren erheblich eingeschränkt hat, da der Grundwiderstand der gassensitiven Schicht mit der Temperatur massiv schwankt.

Eine erfindungsgemäße Sensorvorrichtung weist daher ein Sensorelement auf, das in einem Gehäuse angeordnet ist, welches lufttechnisch verschlossen ist und Luftbewegungen außerhalb das Gehäuses keinen Zutritt zum beheizten Sensorelement gestattet. Das Gehäuse ist bevorzugt so ausgebildet, daß sein Innenraum thermisch gegen die Umgebung isoliert ist.

In dem Gehäuse bildet sich nach einiger Zeit ein thermisches Gleichgewicht zwischen der Heizstruktur, dem Sensorsubstrat als Wärmespeicher und der gassensitiven Schicht aus, weil auch die Luft in deren Umgebung auf ein höheres Niveau aufgeheizt und der Temperaturgradient zwischen Luft und Sensorelement damit verkleinert wird. Die durch den Temperaturgradienten zwischen Luft und Sensorelement verursachten unerwünschten Schwankungen des Sensorwiderstandes werden auf diese Weise erfindungsgemäß wesentlich reduziert.

Das Gehäuse weist erfindungsgemäß eine semipermeable Diffusionsschicht auf, welche für Luftströmungen praktisch undurchlässig ist, jedoch von diffundierenden Luft- und Gasteilchen durchdrungen werden kann. Erfindungsgemäß diffundieren somit aufgrund der unterschiedlichen Partialdrücke innerhalb und außerhalb des Gehäuses Gase durch die Diffusionsschicht in das Gehäuse hinein oder aus ihm hinaus, wobei jedoch eine Luftzirkulation durch die Diffusionsschicht hindurch praktisch unterbunden ist. Aufgrund von Luftbewegungen durch die semipermeable Diffusionsschicht hindurch induzierte Wärmeströme sind daher ausgeschlossen oder zumindestens sehr stark eingeschränkt.

In einer bevorzugten Ausführungsform einer erfindungsgemäßen Sensorvorrichtung ist das Gehäuse einschließlich der Diffusionsschicht wärmedämmend und/oder thermisch isolierend ausgebildet.

Hierdurch wird in Kombination mit einer sehr exakten Heizungs-Regelung erreicht, daß sich in einem sehr weiten Temperaturbereich keinerlei Auswirkungen der Umgebungstemperatur auf den Sensorwiderstand in Normalluft mehr zeigen.

Ein weiterer Vorteil ist, daß sich der Energiebedarf des Sensorelementes durch die erfindungsgemäße wärmedämmende und/oder thermisch isolierte Ausbildung des Gehäuses und der Diffusionsschicht erheblich verringern läßt, was beim Betrieb mit Batterien sehr wichtig und vorteilhaft ist.

Wie oben bei der Erläuterung des Standes der Technik bereits erwähnt, ist es bekannt, die Differenz zwischen aktuellem Signal und Mittelwert auszuwerten. Treten plötzlich Ereignisse auf, auf die der Sensor anspricht, lassen sich diese mit dieser Methode sehr gut detektieren. Langsame und/oder nur kleine Änderungen des Sensorwiderstandes führen dagegen zu keinen Auswertungen bzw. Schaltsignalen. Das aktuelle Sensorsignal wird über eine bestimmte Zeit gemittelt und mit einem konstanten Wert addiert, so daß sich ein im Mittel geringfügig oberhalb des Sensorsignals liegendes gemitteltes Signal ergibt, das als Referenzsignal 52 herangezogen wird. Treten Ereignisse auf, die den Wert des aktuellen Sensorsignals auf Werte oberhalb des Referenzsignals verändern, wird ein Schaltsignal ausgelöst. Langsame Änderungen des aktuellen Sensorsignals werden ignoriert. Hingegen wird beim Auftreten von plötzlichen Konzentrationserhöhungen oxidierbarer Gase in der Umgebungsluft zuverlässig ein Schaltsignal generiert.

In vielen Fällen ist es aber sehr wichtig, daß auch ein langsamer Anstieg von Gaskonzentrationen sicher detektiert wird, z.B. wenn sich die Konzentration toxischer Gase sehr langsam erhöht, was auf jeden Fall detektiert werden muß. Das erläuterte Verfahren kann daher nicht ohne weiteres angewandt werden.

In einem erfindungsgemäßen Verfahren zum Betreiben einer Sensorvorrichtung wird die Heizleistung durch eine zusätzliche Größe (zur Temperatur) beeinflußt. Regelungstechnisch gesehen wird dadurch eine Störgrößen-Aufschaltung vorgenommen.

Dieser erfindungsgemäßen Idee liegt die Beobachtung zugrunde, daß Änderungen der elektrischen Parameter der gassensitiven Sicht des Sensorelementes (Widerstand, Kapazität, Induktivität) sowohl vom Angebot oxidierbarer oder reduzierbarer Gase stammen als auch das Ergebnis von Schwankungen der Luftfeuchte oder der Temperatur sein können.

Im Nachfolgenden sei der Einfachheit halber nur die Detektion oxidierbarer Gase beschrieben. Reduzierbare Gase verhalten sich prinzipiell invers, erhöhen also z.B. den Sensorwiderstand, wogegen oxidierbare Gase diesen verkleinern. Die Erfindung sinngemäß, wenn auch invers, auch für reduzierbare Gase anwendbar.

Im folgenden wird ein erfindungsgemäßes Verfahren erläutert. Zu Beginn gibt der Sensor in Normalluft bei einer bestimmten Heizleistung ein aktuelles Sensorsignal ab. Anschließend wird der Sensor mit einem Gasimpuls von bestimmter Zeitdauer beaufschlagt.

Bei unbeeinflußter Heizleistung kommt das aktuelle Sensorsignal nach Ende des Gasimpulses erst nach längerer Zeit auf den Ausgangswert zurück. Eine Heizleistung mit Störgrößen-Aufschaltung führt hingegen zu einem durch die Heizleistung beeinflußten aktuellen Sensorsignal, welches schneller auf den Ausgangswert zurückkommt. Wird die Heizleistung immer dann z.B. proportional im Sinne einer Temperaturerhöhung nachgeführt, wenn das aktuelle Sensorsignal eine Änderung durchläuft, kommt das aktuelle Sensorsignal signifikant schneller auf den Ausgangswert zurück.

Wesentlich ist, daß im Falle einer tatsächlich am Sensor anstehenden Gaskonzentration die Reaktionen der gassensitiven Schicht mit dem Gas auf jeden Fall stattfinden. Die Temperaturempfindlichkeit des Sensorsignals wird durch die Einwirkung des Gases verringert. Die durch die Temperaturnachführung bewirkte Änderung des Sensorsignals ist daher während des Gasimpulses geringer als vor oder nach dem Gasimpuls. Mit anderen Worten: das Sensorsignal reagiert während des Gasimpulses nur relativ schwach auf eine Änderung der Heizleistung und damit auf die Störgrößenaufschaltung. Die gasinduzierte Verminderung des aktuellen Sensorsignals nimmt daher bei Nachführung der Heizleistung annähernd den gleichen Verlauf wie bei einer ansonsten identischen Versuchsanordnung ohne Temperaturnachführung.

Wird die Reaktion des aktuellen Sensorsignals jedoch von z.B. einer Änderung der Luftfeuchte oder einer Änderung der Lufttemperatur verursacht, so ändert sich die Temperaturempfindlichkeit des Sensorsignals nicht oder nur wenig. Eine Änderung der Luftfeuchte oder einer Änderung der Lufttemperatur haben daher bei unbeeinflußter Heizleistung erheblichen und anhaltenden Einfluß auf das aktuelle Sensorsignal.

Wenn jedoch bereits bei Beginn einer solchen Einwirkung die Heizleistung nachgeführt wurde, ist die durch die Temperaturnachführung bewirkte Beeinflussung des Sensorsignals deutlich größer als im Falle eines Gasipmulses. Sinnvoll ist auch die Überwachung der unteren Explosionsgrenze zum Schutz vor Unfällen nach Gas-Leckagen. Mit anderen Worten: das Sensorsignal reagiert stark auf eine Änderung der Heizleistung und damit auf die Störgrößenaufschaltung. Daher ist die aufgrund einer Änderung der Luftfeuchte oder einer Änderung der Lufttemperatur verursachte Veränderung des Sensorwertes nicht nur viel geringer, sondern auch zeitlich deutlich kürzer als im Fall einer unbeeinflußten Heizleistung.

Erfindungsgemäß ist daher die Heizungsregelung des Sensors so ausgelegt, daß die Führungsgröße des Heizungsreglers die Temperatur ist, und daß eine Störgröße auf die Regelung aufgeschaltet wird, die sich aus der Abweichung des aktuellen Sensorsignals von einem Normalwert bei Normalluft ableitet.

Sowohl die Signalverarbeitung als auch die Heizungsregelung können vorteilhaft durch einen einzigen Singlecircuit-Controller ($\mu$C) gesteuert werden.

Das vorteilhafte Ergebnis einer Kombination aus

a. einer Anordnung des Sensorelementes in einem vorzugsweise thermisch isolierten bzw. wärmedämmenden Gehäuse mit thermisch isolierender bzw. wärmedämmender Diffusionsschicht, durch die ein Gaszutritt zum Sensorelement ohne Luftbewegung durch Diffusion erfolgen kann,
b. einem diffusionsbedingten Gaszutritt zum Sensor ohne Luftbewegung,
c. einer Heizung des Sensorelementes durch Regelung der Temperatur, wobei dem Regelkreis als Störgröße die relative Abweichung des aktuellen Sensorwiderstandes vom Widerstand des Sensorelementes unter Normalbedingungen aufgeschaltet wird,

besteht darin, daß das Sensorsignal schnell und fast ausschließlich dem faktischen Gehalt an oxidierbaren Luftinhaltsstoffen folgt und weitaus weniger Drifterscheinungen als bisher bekannt aufweist.

Wird eine Auswertung vorgenommen, die den aktuellen Sensorwert mit einem über die Zeit ermittelten Durchschnittswert vergleicht, kann dann von deutlich geringeren Schwankungen des Sensorsignals unter Normalbedingungen ausgegangen werden, insbesondere dann, wenn das System nach einiger Zeit stabil geworden ist.

In einer Ausführungsform der Erfindung ist daher die Zeitspanne, über die der Mittelwert der aktuellen Sensorsignale gebildet wird, um als Vergleichswert zum aktuellen Sensorwert zu dienen, nicht konstant, sondern nimmt im Laufe der Betriebszeit des Systems immer weiter zu.

Der erste Vergleichswert wird aus dem Mittelwert über einen relativ kurzen Zeitraum gewonnen, weil das System unmittelbar nach dem Einschalten zwangsläufig hohen eigendynamischen Schwankungen unterliegt. Nach der Einschaltphase wird diese Zeitspanne erhöht und diese erreicht schließlich im eingeschwungenen Zustand eine wesentlich längere Integrationszeit. Da der Mittelwert prinzipiell genau mit dem aktuellen Sensorsignal zusammenfallen kann, wird vom errechneten Durchschnittswert ein bestimmter Betrag abgezogen, um den sogenannten Referenzwert zu bilden.

In einer bevorzugten Ausführungsvariante ist der in Abzug zu bringende Betrag in der Anfangsphase sehr groß, so daß der Referenzwert einen großen Abstand zum Sensorwert hat. Dies ist wichtig, um zu verhindern, daß im nichteingeschwungenen Zustand Signale ausgelöst werden, obwohl keine signifikante Gaskonzentrationsänderung auftritt. Im weiteren zeitlichen Verlauf wird der Betrag sukzessive verkleinert, so daß im eingeschwungenen Zustand sich der Referenzwert immer mehr dem Sensorwert annähert.

Es können weitere Verfeinerungen eingeführt werden. In einer weiteren Ausführungsvariante des erfindungsgemäßen Verfahrens wird der Referenzwert nach heftigen gasinduzierten Sensorreaktionen wieder auf einen größeren Abstand zum Sensorwert gebracht, weil erfahrungsgemäß heftige Reaktionen des Sensors zu zeitweilig instabilen Sensorverhältnissen führen.

In einer weiteren Ausführungsvariante des erfindungsgemäßen Verfahrens wird die Berechnung des Durchschnittswertes wieder über kürzere Zeiträume vorgenommenen, wenn eine gasinduzierte starke Sensorsignaländerung eingetreten ist. In einer weiteren Ausführungsvariante wird die Berechnung des Durchschnittswertes für denjenigen Zeitraum ausgesetzt, in dem eine gasinduzierte Sensorsignaländerung auftritt.

Trotz der geschilderten Maßnahmen könnte der tatsächliche Gaspegel derartig langsam ansteigen, daß der Mittelwert diesem Anstieg im wesentlichen folgt. In diesem Fall könnten sich langsam erhebliche Gaskonzentrationen ausbilden, ohne daß die vorstehend beschriebene Auslösebedingung erfüllt wäre, gemäß der das aktuelle Sensorsignal einen kleineren Wert annimmt als der rechnerisch ermittelte Referenzwert.

In einer weiteren Ausführungsvariante wird daher für den Referenzwert zusätzlich ein Minimalwert festgelegt, wobei der tatsächliche Referenzwert niemals kleiner werden kann als dieser festgelegte Minimalwert. Der Minimalwert ist so gewählt, daß durch sensorbedingte Schwankungen diese Grenze nicht erreicht wird, andererseits die Gaskonzentration, die diesem Sensorsignal zugeordnet werden können, noch keine dauerhaften Schäden auf den Menschen haben, bzw. im Falle einer z.B. Überwachung von Explosionsgrenzen (z.B. Methan-Luft-Gemisch) sich in weitem Sicherheitsabstand zur Explosionsgrenze befindet.

Kommt es, z.B. bei der Anbringung des Sensors an geeigneter Stelle in oder an Atemschutzmasken zum Zwecke der Filter- oder Dichtheitsüberwachung, zu sprunghaften Änderungen der Feuchte oder Temperatur, wird bei Einsatz eines erfindungsgemäßen Verfahrens die Auswirkung dieser Einflüsse auf den Sensorwiderstand absolut kleiner und nur vorübergehend sein.

Trotzdem kann es zu einer irrtümlichen Signalauslösung kommen, die dann ein unerwünschter Fehlalarm wäre. In einer weiteren Ausführungsvariante wird daher eine zeitlich versetzte Auswertung vorgenommen, die im folgenden erläutert wird.

Unter dem Sensor-Normpegel liegt ein Referenzwert. Wenn ein Gasimpuls das aktuelle Sensorsignal um einen bestimmten Betrag verringert, wird der Referenzwert unterschritten und damit das Schaltkriterium erfüllt. Damit wird eine Art "stiller Voralarm", jedoch erfindungsgemäß noch nicht das Schaltsignal ausgelöst. Erst, wenn das Schaltkriterium für eine gewisse Zeitspanne erfüllt bleibt, wird ein Schaltsignal ausgelöst, das während der restlichen Zeitspanne, in der das aktuelle Sensorsignal niedriger bleibt als der Referenzwert, aufrecht erhalten bleibt.

Kommt es dagegen zu einem sehr kurzfristigen und daher praktisch zu vernachlässigenden Gasimpuls oder kommt es zu einem gemäß einem erfindungsgemäßen Verfahren zu kompensierenden Feuchteimpuls, der etwa eine Reaktion des aktuellen Sensorsignals auslöst, wird erfindungsgemäß kein Schaltsignal ausgelöst.

In einer weiteren Ausführungsvariante des erfindungsgemäßen Verfahrens ist die Zeitdauer des Voralarms nicht fest definiert, sondern eine Funktion der Schnelle der Sensorsignal-Änderung oder als Funktion des absoluten Änderungsbetrages über die Zeit. Wenn also innerhalb einer festgelegten Zeitspanne eine sehr große Sensorsignaländerung eingetreten ist, kann die Zeitspanne des Voralarms verkürzt werden. Dies ist vorteilhaft, um bei tatsächlich plötzlich auftretenden großen Gaskonzentrationen die Zeit bis zur Alarmauslösung so kurz wie möglich halten zu können.

Ein ähnliches Ergebnis kann erreicht werden, wenn das Sensorsignal über zwei unterschiedliche Zeitdauern, z.B. sowohl über einen Zeitraum von 20 s als auch über einen Zeitraum von 300 s, gemittelt wird. Von dem über die längere Zeitdauer gebildeten Mittelwert wird, wie vorerwähnt, ein bestimmter Betrag von z.B. 2% des Normalwertes o. ä. abgezogen. Die so ermittelten Werte werden miteinander verglichen.

Wenn der über die kürzere Zeitdauer gebildete Mittelwert kleiner wird als der sich durch Mittelung über die längere Zeitdauer und Abzug eines bestimmten Betrages (z.B. 2 %) ergebende Wert, wird ein Schaltsignal ausgelöst.

Häufig ist es aber nicht sinnvoll, zur Bildung eines Referenzwertes lediglich einen konstanten Betrag vom Mittelwert abzuziehen, da die Sensorkennlinie (Sensorsignal in Abhängigkeit von der Gaskonzentration) in der Regel nicht-linear ist.

Für den Fall, dass der ohmsche Widerstand der gassensitiven Schicht zur Bildung des aktuellen Sensorsignals verwendet wird, bedeutet dies, dass z.B. 10 ppm (parts per million) eines bestimmten Gases abhängig vom Grundwiderstand der gassensitiven Schicht unterschiedliche Widerstandsänderungen bewirken. So ist z.B. bei niedrigem Grundwiderstand die durch 10 ppm eines Gases bedingte relative Widerstandsänderung wesentlich kleiner als bei hohem Grundwiderstand. Diese Tatsache kann berücksichtigt werden, indem erfindungsgemäß die Sensorkennlinien verschiedener Zielgase in der Berechnung des Referenzwertes auf Grundlage des ermittelten Mittelwertes berücksichtigt werden.

Besonders kritisch ist der Einsatz des beschriebenen Sensorsystems, wenn das System in Betrieb genommen wird, während bereits eine erhebliche Gasbelastung vorliegt. Da das System nämlich keine Absolutkonzentrationen messen kann, sondern lediglich Änderungen (bezogen auf den Referenzwert) innerhalb des Beobachtungszeitraumes erfassen kann, würde das System keinen Hinweis (Schaltsignal, Alarm) auf die tatsächlich vorliegende Gasbelastung liefern.

Erfindungsgemäß wird diese Problemstellung dadurch gelöst, dass gemäß einer weiteren Ausführungsvariante des erfindungsgemäßen Verfahrens die Temperatur der gassensitiven Schicht kurzzeitig erhöht wird. Die Temperaturerhöhung bewirkt zum einen eine Verschiebung des Reaktionsgleichgewichts innerhalb der gassensitiven Schicht, die sich in einer Veränderung des Sensorsignals zeigt, zum anderen wird der Sensor kurzzeitig auf einer anderen (temperaturabhängigen) Kennlinie betrieben. Die Erfassung und Auswertung der Sensorsignale vor, während und nach der kurzzeitigen Temperaturerhöhung ermöglicht Rückschlüsse auf eine eventuell vorliegende Gasbelastung.

Im folgenden wird eine erfindungsgemäße Atemschutzmaske erläutert.

Für die gastechnische Verbindung von Sensor und Maskeninnenraum sind erfindungsgemäß verschiedene, alternativ verwendbare Lösungen vorgesehen:

1. Das Sensorsystem ist über ein in die Außenhaut der Maske integriertes Ansatzstück an der Maske gasdicht befestigt. Die Befestigung erfolgt erfindungsgemäß so, daß der Sensor gastechnisch mit dem Augenraum der Maske in Verbindung steht. Der Augenraum ist bedingt durch die ventilgesteuerte Luftführung in der Maske frei von der ausgeatmeten Atemluft des Maskenträgers und enthält nur den Teil der Luft der eingeatmet wird. Die Befestigung am Ansatzstück erfolgt zweckmäßig über ein gasdichtes Schraubgewinde oder einen gasdichten Bajonettverschluß, so daß das Sensorsystem zum Zwecke der Maskenreinigung oder bei Nichtgebrauch leicht und ohne Spezialwerkzeug entfernt werden kann. Bei Nichtgebrauch des Sensorsystems wird das Ansatzstück zu weiteren Verwendung der Atemschutzmaske mit einer Blindplatte gasdicht verschlossen.

2. In den meisten Fällen verfügen Atemschutzmasken über eine Sichtscheibe aus klarem durchsichtigem Kunststoff, die den größten Teil des Gesichtes überdeckt. In diesen Fällen kann ohne wesentliche Beeinträchtigung des Gesichtsfeldes am unteren Rand der Sichtscheibe diese so modifiziert werden, daß dort das Sensorsystem angebracht werden kann. Der Sensor ist dabei über eine nach außen gasdichte Öffnung mit dem Augenraum der Maske gastechnisch verbunden. Die Befestigung des Sensorsystems (Sensor + Elektronik) erfolgt dabei ebenfalls über gasdichte Schraubgewinde, gasdichten Bajonettverschluß oder andere, dem Fachmann bekannte, ohne Werkzeug leicht zu lösende, gasdichte Befestigungen. Die mit dem Sensorsystem verbundenen optischen Funktions- und Warneinrichtungen (z.B. LED) können, da sie sich direkt im Gesichtsfeld befinden, sicher wahrgenommen werden. Vorteilhaft ist bei dieser Variante, daß bei Umrüstung einer vorhandenen Schutzmaske lediglich die Sichtscheibe gewechselt werden muß.

3. In Fällen, in denen eine Anbringung an der Sichtscheibe oder am unteren Rand der Atemschutzmasken nicht möglich oder nicht sinnvoll ist, kann das Sensorsystem auch abgesetzt von der Schutzmaske getragen werden z.B. an den Verschlußriemen der Atemschutzmaske am Hinterkopf oder am Gürtel des Geräteträgers. Die gastechnische Verbindung zwischen Augenraum und Sensor erfolgt dabei zweckmäßig z.B. über eine nach außen gasdichte flexible Schlauchverbindung. Der Gastransport vom Augenraum zum Sensor kann über Diffusion erfolgen. Dies hat jedoch den Nachteil einer unter Umständen erheblichen zeitlichen Verzögerung zwischen Auftreten eines Schadstoffes im Augenraum und der Detektion durch das Sensorsystem. Es wird daher erfindungsgemäß ergänzend vorgeschlagen, daß der Gastransport zwischen Augenraum und Sensor über einen elektrisch betriebenen kleinen Ventilator erfolgt oder mit Hilfe einer Membranpumpe, die über die bei der natürlichen Atmung auftretenden Druckdifferenzen angetriebene wird. Eine solche über Druckdifferenzen angetriebene Membranpumpe kann vom Fachmann leicht angegeben werden. Die zum Sensor geförderte Luft wird entweder über ein Klappenventil an die Außenluft abgegeben oder über eine weitere Schlauchverbindung in den Augenraum zurückgeführt.

4. Alternativ kann das Sensorsystem auch in einem Adapter zwischen Filter und Maske angebracht werden. Hierbei ist jedoch zu beachten, daß das üblicherweise zwischen Filter und Maske innerhalb des Anschlußgewindes in der Maske befindliche Klappenventil filterseitig in den Adapter integriert wird. Dies ist zwingend erforderlich, da ansonsten keine Undichtigkeiten der Maske selbst erkannt werden können. Der Gastransport vom Augenraum zum Sensor über Diffusion ist durch diese Maßname gewährleistet, ohne das die sonstigen Funktionen der Maske beeinträchtigt sind.

Die Signalisierung von in die Maske, eindringenden Schadstoffen erfolgt erfindungsgemäß optisch, z.B. über Lichtquellen bevorzugt verschiedenfarbige LED. Alternativ oder ergänzend kann ein Alarm auch akustisch z.B. mit Hilfe von Schallwandlern erfolgen. Für den Einsatz, in denen die akustische oder optische Wahrnehmungsfähigkeit des Geräteträgers eingeschränkt ist, wird die Verwendung von Reizströmen vorgeschlagen, die zwar medizinisch unbedenklich sind, dem Geräteträger aber dennoch einen Alarm zuverlässig signalisieren.

Da das Sensor-Mikrosystem u.a. einen integrierten Mikroprozessor und andere elektronische Komponenten enthält, ist es denkbar, daß das System durch starke elektromagnetische Strahlung oder andere Störeinflüsse derart beeinträchtigt wird, daß eine ordnungsgemäße Funktion nicht mehr sichergestellt ist. Erfindungsgemäß werden daher die für die Funktion wesentlichen Parameter des Systems überwacht. Bei bestimmungsgemäßer Funktion wird dies durch eine sich ändernde optische Anzeige z.B. bevorzugt eine blinkende, farbige LED angezeigt. Die Ansteuerung der optischen Anzeige erfolgt dabei direkt vom integrierten Mikroprozessor. Dies hat den Vorteil, daß durch das Blinken der Anzeige auch der Prozessor selbst überwacht wird.

Es sind aber auch Situationen denkbar, in denen eine Alarmsignalisierung an den Geräteträger allein nicht ausreichend ist. Dies ist z.B. möglich bei plötzlich auftretenden hohen Schadstoffkonzentrationen in der Atemluft, die den Geräteträger handlungsunfähig machen. Diese Situation kann z.B. Auftreten, wenn in einer Umgebung mit hoher Schadstoffkonzentration die Atemschutzmaske unbeabsichtigt vom Gesicht entfernt wird. Für diese Fälle wird erfindungsgemäß vorgeschlagen, die Daten des Sensor-Mikrosystems (ordnungsgemäße Funktion, Gaskonzentration in der Atemluft, Alarmsignal) über eine drahtlose Datenfernverbindung, z.B. eine digital kodierte Funkverbindung an eine Zentrale zu übermitteln. Zur Fernüberwachung mehrerer Maskenträger mit Sensorsystem, können die Signale einzelner Systeme zur Unterscheidung ebenfalls unterschiedlich digital kodiert sein.

Häufig ist es erforderlich, eventuell aufgetretene Schadstoffbelastungen des Geräteträgers im nachhinein zu rekonstruieren z.B. nach Arbeitsunfällen. Für diese oder ähnliche Fälle wird erfindungsgemäß vorgeschlagen die relevanten Sensordaten (z.B. ordnungsgemäße Funktion, Gaskonzentration in der Atemluft, Alarmsignal) während der Betriebszeit des Sensorsystems in einem Digitalspeicher zu speichern (vergleichbar mit der Black-Box bei Verkehrsflugzeugen). Im Bedarfsfall können diese dann nachträglich ausgewertet werden.

Für eine weitere Ausführungsvariante der Atemschutzmaske mit Sensor- Mikrosystem ist erfindungsgemäß vorgesehen, bei Vorliegen hoher Schadstoffkonzentrationen in der Atemluft des Geräteträgers, auf einen zweiten Filter umzuschalten. Dies ist jedoch nur sinnvoll, wenn die erhöhte Schadstoffkonzentration durch ein erschöpftes Filter bedingt ist. Für zusätzliche Sicherheit auch in Fällen, in denen eine plötzliche Undichtigkeit der Maske auftritt ist erfindungsgemäß vorgesehen bei Vorliegen erhöhter Schadstoffkonzentrationen automatisch ein Ventil zu öffnen, das die Innenmaske mit Luft oder reinem Sauerstoff belüftet. Der erhöhte Druck treibt dabei die belastete Luft nach außen und ermöglicht dem Geräteträger, den belasteten Bereich zu verlassen oder andere Schutzmaßnahmen vorzunehmen. Die Luft oder der reine Sauerstoff stammt aus einem geeigneten Druckbehälter, der außen an der Maske angebracht ist.

Als sicherheitserhöhendes Merkmal ist ergänzend vorgesehen, die Maske mit einem zusätzlichen Sensor auszustatten, der die Luftqualität auch außerhalb der Maske überwacht. Bei Vorliegen vorgegebener Schadstoffkonzentrationen in der Außenluft kann so ein sogenannter Vor-Alarm signalisiert werden, der den Maskenträger zu erhöhter Aufmerksamkeit und Vorsicht auffordert.

Das zur Detektion von in die Maske eindringenden Schadstoffen bevorzugt zu verwendende Sensorsystem ist ein Mikrosystem, bestehend aus den Komponenten Metalloxid-Sensor, Elektronik und Mikroprozesor mit integrierter Software zur Steuerung und Auswertung des Sensorelementes.

Ein erfindungsgemäße Atemschutzmaske kann besonders vorteilhaft mit einer erfindungsgemäßen Sensorvorrichtung zur Detektion von in Luft enthaltenen Gasen oder Dämpfen ausgestattet und besonders vorteilhaft mit einem erfindungsgemäßen Verfahren zur Detektion von in Luft enthaltenen Gasen oder Dämpfen betrieben werden.

Kurzbeschreibung der Zeichnung, in der zeigen:

Fig. 1      eine schematische Darstellung eines Sensorelementes mit einer typischen bekannten Schaltung, welche in einer bevorzugten Ausführungsform der Erfindung eingesetzt wird,

Fig. 2      eine schematische Darstellung einer zeitlichen Abfolge einer Anzahl von Heizimpulsen und stromlosen Zeitintervallen zur Temperaturregelung,

Fig. 3      eine detaillierte Darstellung des Sensorelementes (links) sowie einen typischen Verlauf der Temperatur in einer Richtung senkrecht zur Ebene des Sensorelementes (rechts),

Fig. 4      eine erfindungsgemäße Anordnung eines Sensorelementes in einem Gehäuse,

Fig. 5      ein Beispiel für den zeitlichen Verlauf von Sensorsignal und Heizleistung bei eines dem Stand der Technik entsprechenden Verfahrens zum Betreiben eines Sensorelementes,

Fig. 6      ein Beispiel für den zeitlichen Verlauf von Sensorsignal und Heizleistung bei einer Ausführungsvariante eines erfindungsgemäßen Verfahrens zum Betreiben eines Sensorelementes,

Fig. 7      ein Beispiel für den zeitlichen Verlauf von Sensorsignal und Heizleistung bei einer anderen Ausführungsvariante eines erfindungsgemäßen Verfahrens zum Betreiben eines Sensorelementes,

Fig. 8      eine Ausführungsform einer erfindungsgemäßen Atemschutzmaske,

Fig. 9      eine andere Ausführungsform einer erfindungsgemäßen Atemschutzmaske,

Fig. 10      eine weitere Ausführungsform einer erfindungsgemäßen Atemschutzmaske,

Fig. 11      eine weitere Ausführungsform einer erfindungsgemäßen Atemschutzmaske, und

Fig. 12      eine weitere Ausführungsform einer erfindungsgemäßen Atemschutzmaske.

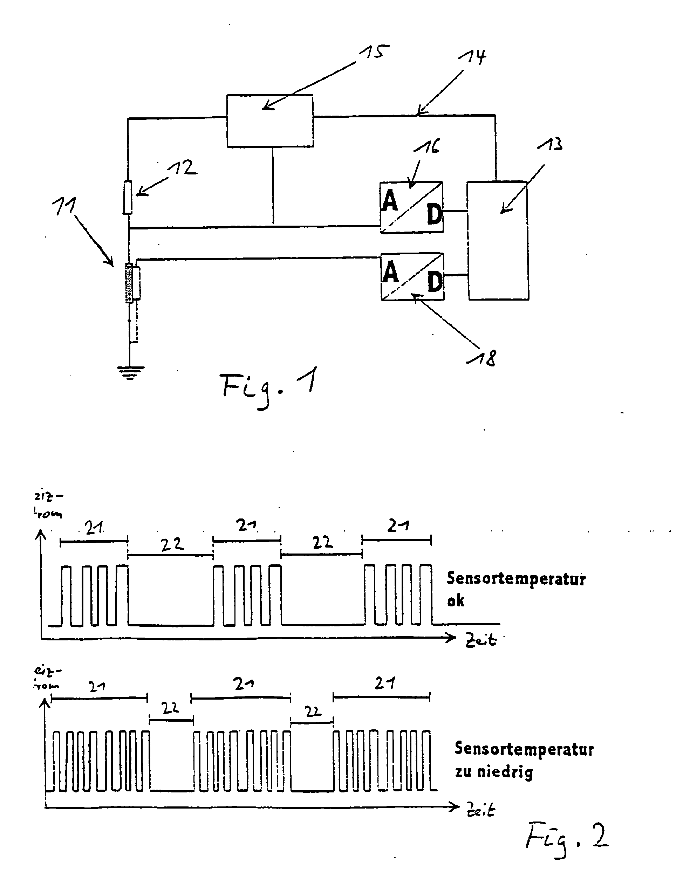

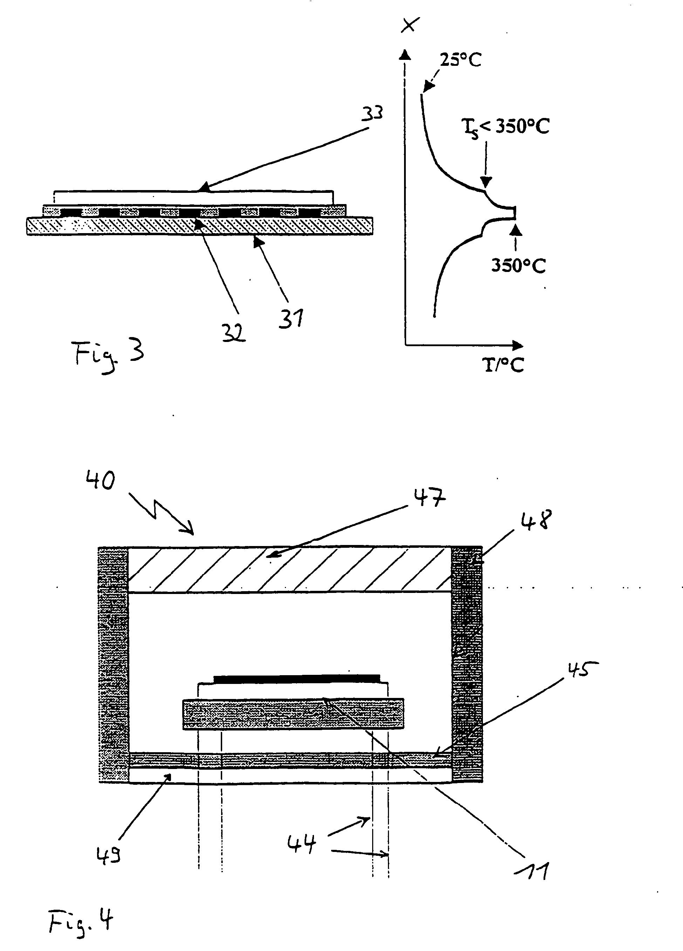

Figur 1 zeigt schematisch ein Sensorelement 11 mit einer typischen bekannten Schaltung, welche in einer bevorzugten Ausführungsform der Erfindung eingesetzt wird. Das Sensorelement 11 weist ein Sensorsubstrat 31, eine gassensitive Schicht 33 und eine zwischen diesen angeordnete Heizstruktur 32 auf (Fig. 3).

Die Heizstruktur 32 wird elektrisch über einen Aussenwiderstand 12 (Fig. 1) angesteuert, welcher so dimensioniert ist, dass der Stromfluss das Sensorelement 11 keinesfalls auf die Soll-Temperatur aufheizen wird. Vielmehr wird periodisch von einem zentralen Steuer- und Regelgerät 13, vorteilhaft als Mikrocontroller (μC) ausgebildet, über eine Steuerleitung 14 ein Impuls auf einen Schaltbaustein 15 gegeben, welcher einen energiereichen Schaltimpuls an die Heizstruktur 32 abgibt. Außenwiderstand 12 und Heizstruktur 32 bilden einen Spannungsteiler. Nach Abschalten dieses Impulses wird diejenige Spannung über einen ersten A/D-Wandler 16 gemessen, die am Spannungsteiler zwischen Heizstruktur 32 und Außenwiderstand 12 abgegriffen wird.

Ist die Spannung zu hoch - Heizstruktur 32 ist zu hochohmig, also ist die Sensortemperatur zu hoch - wird bei den nächsten Perioden der Heizimpuls oder die Anzahl der Heizimpulse verkürzt. Sollte die Spannung hingegen zu klein sein - Heizstruktur 32 ist zu niederohmig, also ist die Sensortemperatur zu niedrig - wird bei den nächsten Perioden der Heizimpuls oder die Anzahl der Heizimpulse verlängert.

Die Impedanz der gassensitiven Schicht 33 des Sensorelementes 11 wird mit dem zentralen Steuer- und Regelgerät 13, geeigneter Software und einem zweiten A/D-Wandler 18, der an die gassensitive Schicht 33 angeschlossen ist, gemessen und steht damit als Signal zur Auswertung zur Verfügung. Im einfachsten Fall wird hierbei lediglich der ohmsche Widerstand gemessen.

Figur 2 zeigt zur Erläuterung der Systematik der Temperaturregelung die zeitliche Abfolge einer Anzahl von Heizimpulsen 21 und stromlosen Zeitintervallen 22. Wenn die Temperatur dem Soll entspricht, besteht ein bestimmtes Verhältnis zwischen der Anzahl der Heizimpulse 21 und den stromlosen Zeitintervallen 22 (Fig. 2 oben). Wenn das Sensorelement 11 z.B. zu kalt ist, wird die Anzahl der Heizimpulse 21 vergrößert, und die stromlosen Zeitintervalle 22 werden relativ verkürzt (Fig. 2 unten).

Figur 3 zeigt eine detaillierte Darstellung des Sensorelementes 11 (links) sowie einen typischen Verlauf der Temperatur in einer Richtung ()in Fig. 3 x-Richtung bezeichnet) senkrecht zur Ebene des Sensorelementes 11 (rechts) und macht die grundsätzliche Schwierigkeit der Temperaturregelung deutlich. Die Heizstruktur 32 befindet sich zwischen der gassensitiven Schicht 33 und einem Sensorsubstrat 31. Selbst wenn die Temperatur der Heizstruktur 32 völlig konstant wäre, kann damit trotzdem keine unter allen Umständen konstante Temperatur der gassensitiven Schicht 33 erreicht werden, weil der Temperaturgradient zwischen dieser und der umgebenden Luft sehr groß ist und durch die vom Sensorelement 11 durch Strahlung und konvektiv abgegebenen Wärme beeinflußt wird.

Wenn die Temperatur der Heizstruktur 32 auf z.B. 350°C eingeregelt ist, kann die Temperatur der Umgebungsluft in der Praxis zwischen -40° C und + 80°C schwanken. Aufgrund des Temperaturgradienten zwischen Umgebung und Sensorelement 11 ist an der Oberfläche der gassensitiven Schicht 33 eine vom Heizer abweichende Temperatur feststellbar, welche typisch kleiner als der Sollwert ist.

Die vom Sensorelement 11 an die Umgebung abgegebene Wärmeenergie ist zum einen eine Funktion des Temperaturgradienten, andererseits eine Funktion der Strömungsgeschwindigkeit der Luft relativ zum Sensorelement 11.

Selbst bei nur geringsten Luftbewegungen in der Nähe des Sensorelementes 11 ändern sich die Temperaturgradienten zwischen

- der auf konstanter Temperatur gehaltenen Heizstruktur 32,
- der gassensitiven Schicht 33 und der
- Temperatur der Umgebungsluft.

Daher wird man trotz aufwendiger elektronischer Regelungen in der Praxis immer erhebliche Schwankungen des Sensorwiderstandes in Normalluft feststellen, was in der Vergangenheit den Einsatz von Halbleitersensoren erheblich eingeschränkt hat, da der Grundwiderstand der gassensitiven Schicht 33 mit der Temperatur massiv schwankt.

Figur 4 zeigt eine erfindungsgemäße Sensorvorrichtung. Ein Sensorelement 11 ist in einem Gehäuse 40 angeordnet, welches lufttechnisch verschlossen ist und Luftbewegungen außerhalb das Gehäuses 40 keinen Zutritt zum beheizten Sensorelement 11 gestattet. Das Gehäuse 40 ist bevorzugt so ausgebildet, daß sein Innenraum thermisch gegen die Umgebung isoliert ist.

In dem Gehäuse 40 bildet sich nach einiger Zeit ein thermisches Gleichgewicht zwischen der Heizstruktur 32, dem Sensorsubstrat 31 als Wärmespeicher und der gassensitiven Schicht 33 aus, weil auch die Luft in deren Umgebung auf ein höheres Niveau aufgeheizt und der Temperaturgradient zwischen Luft und Sensorelement 11 damit verkleinert wird. Die durch den Temperaturgradienten zwischen Luft und Sensorelement 11 verursachten unerwünschten Schwankungen des Sensorwiderstandes werden auf diese Weise erfindungsgemäß wesentlich reduziert.

Das Gehäuse 40 weist erfindungsgemäß eine semipermeable Diffusionsschicht 47 auf, welche für Luftströmungen praktisch undurchlässig ist, jedoch von diffundierenden Luft- und Gasteilchen durchdrungen werden kann. Die Diffusionsschicht 47 besteht z.B. aus feinstkapilarem Kunststoff (Teflon, gereckte Folien etc.) oder z.B. aus einem Sinterkörper der aus Metall, Kunststoff, Glas oder Keramik. In einer bevorzugten Ausführungsform der Erfindung bildet die Diffusionsschicht die Deckfläche des Gehäuses 40.

Erfindungsgemäß diffundieren aufgrund der unterschiedlichen Partialdrücke innerhalb und außerhalb des Gehäuses 40 Gase durch die Diffusionsschicht 47 in das Gehäuse 40 hinein oder aus ihm hinaus, wobei jedoch eine Luftzirkulation durch die Diffusionsschicht 47 hindurch praktisch unterbunden ist.

Aufgrund von Luftbewegungen durch die semipermeable Diffusionsschicht 47 hindurch induzierte Wärmeströme sind ausgeschlossen oder zumindestens sehr stark eingeschränkt.

Die Anschlußdrähte 44 des Sensorelementes 11 sind vorzugsweise gasdicht z.B. durch den Gehäuseboden 45 geführt. Bevorzugt erfolgt dies, indem die Anschlußdrähte 44 in eine den Gehäuseboden 45 bedeckende Glasschicht 49 eingeschmolzen sind.

In einer bevorzugten Ausführungsform einer erfindungsgemäßen Sensorvorrichtung sind der Gehäusemantel 48, der Gehäuseboden 45 sowie die Diffusionsschicht 47 und damit das Gehäuse 40 wärmedämmend und/oder thermisch isolierend ausgebildet.

Hierdurch wird in Kombination mit einer sehr exakten Heizungs-Regelung erreicht, daß sich in einem sehr weiten Temperaturbereich keinerlei Auswirkungen der Umgebungstemperatur auf den Sensorwiderstand in Normalluft mehr zeigen.

Ein weiterer Vorteil ist, daß sich der Energiebedarf des Sensorelementes 11 durch die erfindungsgemäße wärmedämmende und/oder thermisch isolierte Ausbildung des Gehäuses 40 und der Diffusionsschicht 47 erheblich verringern läßt, was beim Betrieb mit Batterien sehr wichtig und vorteilhaft ist.

Wie oben bei der Erläuterung des Standes der Technik bereits erwähnt, ist es bekannt, die Differenz zwischen aktuellem Signal und Mittelwert auszuwerten. Treten plötzlich Ereignisse auf, auf die der Sensor anspricht, lassen sich diese mit dieser Methode sehr gut detektieren. Langsame und/oder nur kleine Änderungen des Sensorwiderstandes führen dagegen zu keinen Auswertungen bzw. Schaltsignalen.

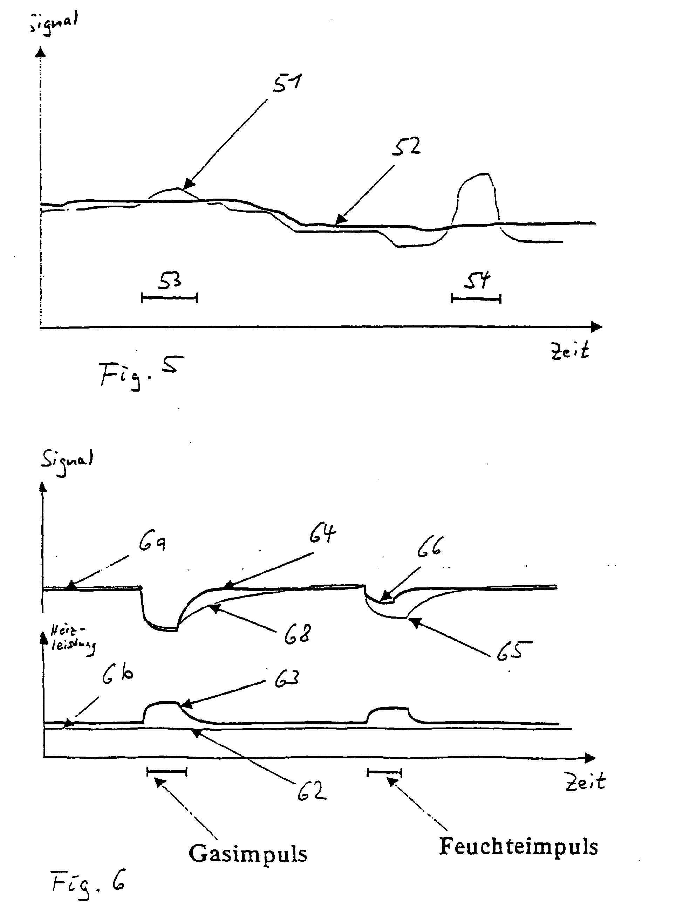

Figur 5 verdeutlicht dieses bekannte Verfahren. Das aktuelle Sensorsignal 51 wird über eine bestimmte Zeit gemittelt und mit einem konstanten Wert addiert, so daß sich ein im Mittel geringfügig oberhalb des Sensorsignals liegendes gemitteltes Signal ergibt, das als Referenzsignal 52 herangezogen wird. Treten Ereignisse 53, 54 auf, die den Wert des aktuellen Sensorsignals auf Werte oberhalb des Referenzsignals 52 verändern, wird ein Schaltsignal ausgelöst.

Langsame Änderungen des aktuellen Sensorsignals werden ignoriert. Hingegen wird beim Auftreten von plötzlichen Konzentrationserhöhungen oxidierbarer Gase in der Umgebungsluft zuverlässig ein Schaltsignal generiert.

In vielen Fällen ist es aber sehr wichtig, daß auch ein langsamer Anstieg von Gaskonzentrationen sicher detektiert wird, z.B. wenn sich die Konzentration toxischer Gase sehr langsam erhöht, was auf jeden Fall detektiert werden muß. Das unter Bezug auf Fig. 5 erläuterte Verfahren kann daher nicht ohne weiteres angewandt werden.

In einem erfindungsgemäßen Verfahren zum Betreiben einer erfindungsgemäßen Sensorvorrichtung wird die Heizleistung durch eine zusätzliche Größe (zur Temperatur) beeinflußt. Regelungstechnisch gesehen wird dadurch eine Störgrößen-Aufschaltung vorgenommen.

Dieser erfindungsgemäßen Idee liegt die Beobachtung zugrunde, daß Änderungen der elektrischen Parameter der gassensitiven Sicht 33 des Sensorelementes 11 (Widerstand, Kapazität, Induktivität) sowohl vom Angebot oxidierbarer oder reduzierbarer Gase stammen als auch das Ergebnis von Schwankungen der Luftfeuchte oder der Temperatur sein können.

Im Nachfolgenden sei der Einfachheit halber nur die Detektion oxidierbarer Gase beschrieben. Reduzierbare Gase verhalten sich prinzipiell invers, erhöhen also z.B. den Sensorwiderstand, wogegen oxidierbare Gase diesen verkleinern. Die Erfindung sinngemäß, wenn auch invers, auch für reduzierbare Gase anwendbar.

Figur 6 dient zur Erläuterung des Wirkungszusammenhanges. Zu Beginn gibt der Sensor in Normalluft bei einer Heizleistung von 6b ein aktuelles Sensorsignal ab, in Fig. 6 gekennzeichnet durch 6a. Anschließend wird der Sensor mit einem Gasimpuls, dessen Zeitdauer in Fig. 6 unten gekennzeichnet ist, beaufschlagt.

Der Kurvenabschnitt 68 in Fig. 6 zeigt den Verlauf des aktuellen Sensorsignals bei unbeeinflußter Heizleistung. Bei unbeeinflußter Heizleistung kommt das aktuelle Sensorsignal nach Ende des Gasimpulses erst nach längerer Zeit auf den Ausgangswert zurück. Der auf des Ende des Gasimpulses folgende Abschnitt der Kurve 68 zeigt diese Reaktion des aktuellen Sensorsignals auf den Gasimpuls bei konstanter Heizleistung, die in Fig. 6 durch die Linie 62 dargestellt ist

Eine Heizleistung mit Störgrößen-Aufschaltung, in Fig. 6 dargestellt durch die Kurve 63, führt hingegen zu einem durch die Heizleistung beeinflußten aktuellen Sensorsignal, das in Fig. 6 dem Kurvenabschnitt 64 folgt.

Wird die Heizleistung immer dann z.B. proportional im Sinne einer Temperaturerhöhung nachgeführt (Kurve 63), wenn das aktuelle Sensorsignal eine Änderung durchläuft, kommt das aktuelle Sensorsignal signifikant schneller auf den Ausgangswert zurück. Der auf des Ende des Gasimpulses folgende Abschnitt der Kurve 64 zeigt diese Reaktion des aktuellen Sensorsignals auf den Gasimpuls bei nachgeführter Heizleistung, die in Kurve 63 dargestellt ist

Wesentlich ist, daß im Falle einer tatsächlich am Sensor anstehenden Gaskonzentration die Reaktionen der gassensitiven Schicht 33 mit dem Gas auf jeden Fall stattfinden. Die Temperaturempfindlichkeit des Sensorsignals wird durch die Einwirkung des Gases verringert. Die durch die Temperaturnachführung bewirkte Änderung des Sensorsignals ist daher während des Gasimpulses geringer als vor oder nach dem Gasimpuls. Mit anderen Worten: das Sensorsignal reagiert während des Gasimpulses nur relativ schwach auf eine Änderung der Heizleistung und damit auf die Störgrößenaufschaltung. Die gasinduzierte Verminderung des aktuellen Sensorsignals nimmt daher bei Nachführung der Heizleistung annähernd den gleichen Verlauf wie bei einer ansonsten identischen Versuchsanordnung ohne Temperaturnachführung. D.h., die nach Beginn des Gasimpulses jeweils abfallenden Äste der Kurven 64 und 68 in Fig. 6 verlaufen annähernd deckungsgleich.

Wird die Reaktion des aktuellen Sensorsignals jedoch von z.B. einer Änderung der Luftfeuchte oder einer Änderung der Lufttemperatur verursacht, so ändert sich die Temperaturempfindlichkeit des Sensorsignals nicht oder nur wenig. Eine Änderung der Luftfeuchte oder einer Änderung der Lufttemperatur haben daher bei unbeeinflußter Heizleistung erheblichen und anhaltenden Einfluß auf das aktuelle Sensorsignal (Kurvenabschnitt 65 in Fig. 6).

Wenn jedoch bereits bei Beginn einer solchen Einwirkung die Heizleistung nachgeführt wurde, ist die durch die Temperaturnachführung bewirkte Beeinflussung des Sensorsignals deutlich größer als im Falle eines Gasimpulses. Mit anderen Worten: das Sensorsignal reagiert stark auf eine Änderung der Heizleistung und damit auf die Störgrößenaufschaltung. Daher ist die aufgrund einer Änderung der Luftfeuchte oder einer Änderung der Lufttemperatur verursachte Veränderung des Sensorwertes nicht nur viel geringer, sondern auch zeitlich deutlich kürzer (Kurvenabschnitt 66 in Fig. 6) als im Fall einer unbeeinflußten Heizleistung (Kurvenabschnitt 65 in Fig. 6), und bereits die abfallenden Äste der Kurven 65 und 66 in Fig. 6 verlaufen nicht deckungsgleich.

Durch eine erfindungsgemäßes Verfahren kann somit anhand des zeitlichen Verhaltens des Sensorsignals zwischen einem Gasimpuls und einem Feuchteimpuls unterschieden werden. Die Reaktion des Sensorsignals auf den Feuchteimpuls wird erfindungsgemäß zu einem erheblichen Teil durch die Heizungsnachführung kompensiert.

Erfindungsgemäß ist daher die Heizungsregelung des Sensors so ausgelegt, daß die Führungsgröße des Heizungsreglers die Temperatur ist, und daß eine Störgröße auf die Regelung aufgeschaltet wird, die sich aus der Abweichung des aktuellen Sensorsignals von einem Normalwert bei Normalluft ableitet.

Wie unter Bezug auf Fig. 1 und 2 erläutert wurde, können sowohl die Signalverarbeitung als auch die Heizungsregelung vorteilhaft durch einen einzigen Singlecircuit-Controller ($\mu$C) gesteuert werden.

Das vorteilhafte Ergebnis einer Kombination aus

    a. einer Anordnung des Sensorelementes 11 in einem thermisch isolierten bzw. wärmedämmenden Gehäuse 40 mit thermisch isolierender bzw. wärmedämmender Diffusionsschicht 47, durch die ein Gaszutritt zum Sensorelement 11 ohne Luftbewegung durch Diffusion erfolgen kann,
    b. einem diffusionsbedingten Gaszutritt zum Sensor ohne Luftbewegung,
    c. einer Heizung des Sensorelementes 11 durch Regelung der Temperatur, wobei dem Regelkreis als Störgröße die relative Abweichung des aktuellen Sensorwiderstandes vom Widerstand des Sensorelementes 11 unter Normalbedingungen aufgeschaltet wird,

    besteht darin, daß das Sensorsignal schnell und fast ausschließlich dem faktischen Gehalt an oxidierbaren Luftinhaltsstoffen folgt und weitaus weniger Drifterscheinungen als bisher bekannt aufweist.

Wird eine Auswertung vorgenommen, die den aktuellen Sensorwert mit einem über die Zeit ermittelten Durchschnittswert vergleicht, kann dann von deutlich geringeren Schwankungen des Sensorsignals unter Normalbedingungen ausgegangen werden, insbesondere dann, wenn das System nach einiger Zeit stabil geworden ist.

In einer Ausführungsvariante des erfindungsgemäßen Verfahrens ist daher die Zeitspanne, über die der Mittelwert der aktuellen Sensorsignale gebildet wird, um als Vergleichswert zum aktuellen Sensorwert zu dienen, nicht konstant, sondern nimmt im Laufe der Betriebszeit des Systems immer weiter zu.

Der erste Vergleichswert wird aus dem Mittelwert über einen relativ kurzen Zeitraum gewonnen, weil das System unmittelbar nach dem Einschalten zwangsläufig hohen eigendynamischen Schwankungen unterliegt. Nach der Einschaltphase wird diese Zeitspanne erhöht und diese erreicht schließlich im eingeschwungenen Zustand eine wesentlich längere Integrationszeit. Da der Mittelwert prinzipiell genau mit dem aktuellen Sensorsignal zusammenfallen kann, wird vom errechneten Durchschnittswert ein bestimmter Betrag abgezogen, um den sogenannten Referenzwert zu bilden.

In einer bevorzugten Ausführungsvariante ist der in Abzug zu bringende Betrag in der Anfangsphase sehr groß, so daß der Referenzwert einen großen Abstand zum Sensorwert hat. Dies ist wichtig, um zu verhindern, daß im nichteingeschwungenen Zustand Signale ausgelöst werden, obwohl keine signifikante Gaskonzentrationsänderung auftritt. Im weiteren zeitlichen Verlauf wird der Betrag sukzessive verkleinert, so daß im eingeschwungenen Zustand sich der Referenzwert immer mehr dem Sensorwert annähert.

Es können weitere Verfeinerungen eingeführt werden. In einer weiteren Ausführungsvariante des erfindungsgemäßen Verfahrens wird der Referenzwert nach heftigen gasinduzierten Sensorreaktionen wieder auf einen größeren Abstand zum Sensorwert gebracht, weil erfahrungsgemäß heftige Reaktionen des Sensors zu zeitweilig instabilen Sensorverhältnissen führen.

In einer weiteren Ausführungsvariante wird die Berechnung des Durchschnittswertes wieder über kürzere Zeiträume vorgenommen, wenn eine gasinduzierte starke Sensorsignaländerung eingetreten ist. In einer weiteren Ausführungsform wird die Berechnung des Durchschnittswertes für denjenigen Zeitraum ausgesetzt, in dem eine gasinduzierte Sensorsignaländerung auftritt.

Trotz der geschilderten Maßnahmen könnte der tatsächliche Gaspegel derartig langsam ansteigen, daß der Mittelwert diesem Anstieg im wesentlichen folgt. In diesem Fall könnten sich langsam erhebliche Gaskonzentrationen ausbilden, ohne daß die vorstehend beschriebene Auslösebedingung erfüllt wäre, gemäß der das aktuelle Sensorsignal einen kleineren Wert annimmt als der rechnerisch ermittelte Referenzwert.

In einer weiteren Ausführungsvariante wird daher für den Referenzwert zusätzlich ein Minimalwert festgelegt, wobei der tatsächliche Referenzwert niemals kleiner werden kann als dieser festgelegte Minimalwert. Der Minimalwert ist so gewählt, daß durch sensorbedingte Schwankungen diese Grenze nicht erreicht wird, andererseits die Gaskonzentration, die diesem Sensorsignal zugeordnet werden können, noch keine dauerhaften Schäden auf den Menschen haben, bzw. im Falle einer z.B. Überwachung von Explosionsgrenzen (z.B. Methan-Luft-Gemisch) sich in weitem Sicherheitsabstand zur Explosionsgrenze befindet.

Kommt es (z.B. bei der Anbringung des Sensors an geeigneter Stelle in oder an Atemschutzmasken zum Zwecke der Filter- oder Dichtheitsüberwachung), zu sprunghaften Änderungen der Feuchte oder Temperatur, wird bei Einsatz eines erfindungsgemäßen Verfahrens die Auswirkung dieser Einflüsse auf den Sensorwiderstand absolut kleiner und nur vorübergehend sein.

Trotzdem kann es zu einer irrtümlichen Signalauslösung kommen, die dann ein unerwünschter Fehlalarm wäre.

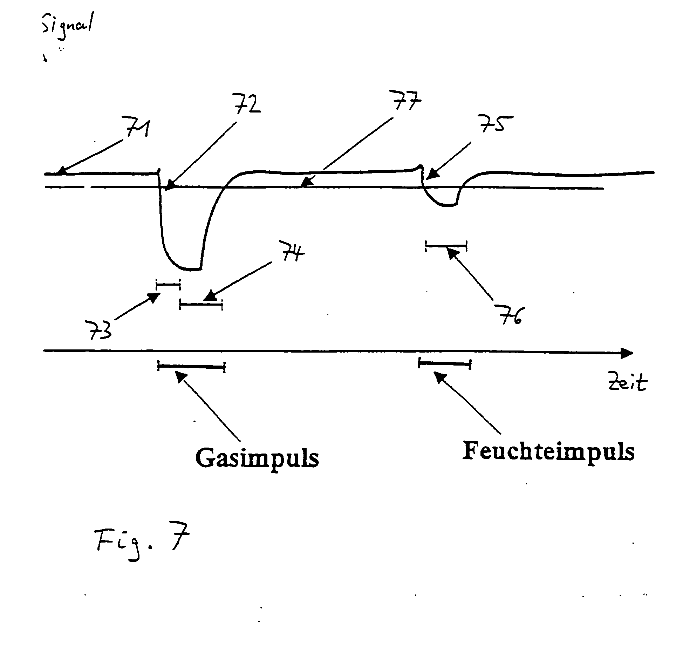

In einer weiteren Ausführungsvariante wird daher eine zeitlich versetzte Auswertung vorgenommen, die unter Bezug auf Figur 7 erläutert wird.

Unter dem Sensor-Normpegel 71 liegt ein Referenzwert 77. Wenn ein Gasimpuls das aktuelle Sensorsignal um einen bestimmten Betrag verringert (mit 72 gekennzeichneter Kurvenabschnitt), wird der Referenzwert unterschritten und damit das Schaltkriterium erfüllt. Damit wird eine Art "stiller Voralarm", jedoch erfindungsgemäß noch nicht das Schaltsignal ausgelöst. Erst, wenn das Schaltkriterium für eine gewisse Zeitspanne, in Fig. 7 gekennzeichnet durch die Zeitdauer 73, erfüllt bleibt, wird ein Schaltsignal ausgelöst, das während der restlichen Zeitspanne (in Fig. 7 gekennzeichnet durch die Zeitdauer 74), in der das aktuelle Sensorsignal niedriger bleibt als der Referenzwert, aufrecht erhalten bleibt.

Kommt es dagegen zu einem sehr kurzfristigen und daher praktisch zu vernachlässigenden Gasimpuls oder kommt es zu einem erfindungsgemäß zu kompensierenden Feuchteimpuls, der etwa eine Reaktion des aktuellen Sensorsignals auslöst, wie sie in Fig. 7 mit 75 gekennzeichnet ist, wird erfindungsgemäß kein Schaltsignal ausgelöst.

In einer weiteren Ausführungsvariante des erfindungsgemäßen Verfahrens ist die Zeitdauer 73 von Fig. 7 des Voralarms nicht fest definiert, sondern eine Funktion der Schnelle der Sensorsignal-Änderung oder eine Funktion des absoluten Änderungsbetrages über die Zeit.

Wenn also innerhalb einer festgelegten Zeitspanne eine sehr große Sensorsignaländerung eingetreten ist, kann die Zeitspanne des Voralarms verkürzt werden. Dies ist vorteilhaft, um bei tatsächlich plötzlich auftretenden großen Gaskonzentrationen die Zeit bis zur Alarmauslösung so kurz wie möglich halten zu können.

Ein ähnliches Ergebnis kann erreicht werden, wenn das Sensorsignal über zwei unterschiedliche Zeitdauern, z.B. sowohl über einen Zeitraum von 20 s als auch über einen Zeitraum von 300 s, gemittelt wird. Von dem über die längere Zeitdauer gebildeten Mittelwert wird, wie vorerwähnt, ein bestimmter Betrag von z.B. 2% des Normalwertes o. ä. abgezogen. Die so ermittelten Werte werden miteinander verglichen.

Wenn der über die kürzere Zeitdauer gebildete Mittelwert kleiner wird als der sich durch Mittelung über die längere Zeitdauer und Abzug eines bestimmten Betrages (z.B. 2 %) ergebende Wert, wird ein Schaltsignal ausgelöst.

Mathematisch läßt sich dies z.B. für den Fall, daß die längere Zeitdauer 10mal so lang ist wie die kürzere, durch Bildung folgender Differenz ausdrücken:

$$\frac{S_1 + S_2 + S_3 + ... + S_n}{n} - 0{,}98 * \frac{S_1 + S_2 + S_3 + ... + S_{(10*n)}}{10*n} = Y$$

Das Schaltkriterium ist erreicht, wenn der Wert Y negativ wird.

Häufig ist es aber nicht sinnvoll, zur Bildung eines Referenzwertes lediglich einen konstanten Betrag vom Mittelwert abzuziehen, da die Sensorkennlinie (Sensorsignal in Abhängigkeit von der Gaskonzentration) in der Regel nicht-linear ist.

Für den Fall, dass der ohmsche Widerstand der gassensitiven Schicht 33 zur Bildung des aktuellen Sensorsignals verwendet wird, bedeutet dies, dass z.B. 10 ppm (parts per million) eines bestimmten Gases abhängig vom Grundwiderstand der gassensitiven Schicht unterschiedliche Widerstandsänderungen bewirken. So ist z.B. bei niedrigem Grundwiderstand die durch 10 ppm eines Gases bedingte relative Widerstandsänderung wesentlich kleiner als bei hohem Grundwiderstand. Diese Tatsache kann berücksichtigt werden, indem erfindungsgemäß die Sensorkennlinien verschiedener Zielgase in der Berechnung des Referenzwertes auf Grundlage des ermittelten Mittelwertes berücksichtigt werden.

Besonders kritisch ist der Einsatz des beschriebenen Sensorsystems, wenn das System in Betrieb genommen wird, während bereits eine erhebliche Gasbelastung vorliegt. Da das System nämlich keine Absolutkonzentrationen messen kann, sondern lediglich Änderungen (bezogen auf den Referenzwert) innerhalb des Beobachtungszeitraumes erfassen kann, würde das System keinen Hinweis (Schaltsignal, Alarm) auf die tatsächlich vorliegende Gasbelastung liefern.

Erfindungsgemäß wird diese Problemstellung dadurch gelöst, dass die Temperatur der gassensitiven Schicht kurzzeitig erhöht wird. Die Temperaturerhöhung bewirkt zum einen eine Verschiebung des Reaktionsgleichwichts innerhalb der gassensitiven Schicht, die sich in einer Veränderung des Sensorsignals zeigt, zum anderen wird der Sensor kurzzeitig auf einer anderen (temperaturabhängigen) Kennlinie betrieben. Die Erfassung und Auswertung der Sensorsignale vor, während und nach der kurzzeitigen Temperaturerhöhung ermöglicht Rückschlüsse auf eine eventuell vorliegende Gasbelastung.

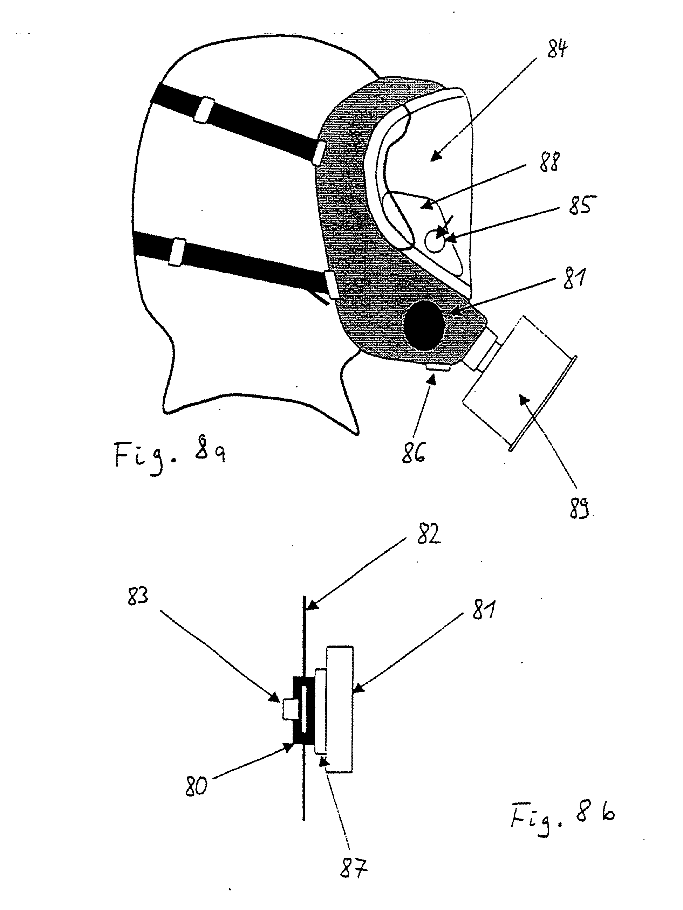

Im folgenden werden anhand der Fig. 8 bis 12 verschiedene Ausführungsformen einer erfindungsgemäßen Atemschutzmaske erläutert.

Für die gastechnische Verbindung von Sensor und Maskeninnenraum sind erfindungsgemäß verschiedene, alternativ verwendbare Lösungen vorgesehen.

1. Wie in Fig. 8a und 8b dargestellt, wird das Sensorsystem 81 über ein in die Außenhaut 82 der Maske integriertes Ansatzstück 80 an der Maske gasdicht befestigt. Die Befestigung erfolgt erfindungsgemäß so, daß der Sensor 83 gastechnisch mit dem Augenraum 84 der Maske in Verbindung steht. Der Augenraum 84 ist bedingt durch die ventilgesteuerete Luftführung 85, 86 in der Maske frei von der ausgeatmeten Atemluft des Maskenträgers und enthält nur den Teil der Luft der eingeatmet wird. Die Befestigung am Ansatzstück 80 erfolgt zweckmäßig über ein gasdichtes Schraubgewinde oder einen gasdichten Bajonettverschluß 87, so daß das Sensorsystem 81 zum Zwecke der Maskenreinigung oder bei Nichtgebrauch leicht und ohne Spezialwerkzeug entfernt werden kann. Bei Nichtgebrauch des Sensorsystems wird das Ansatzstück zu weiterer Verwendung der Atemschutzmaske mit einer Blindplatte gasdicht verschlossen.

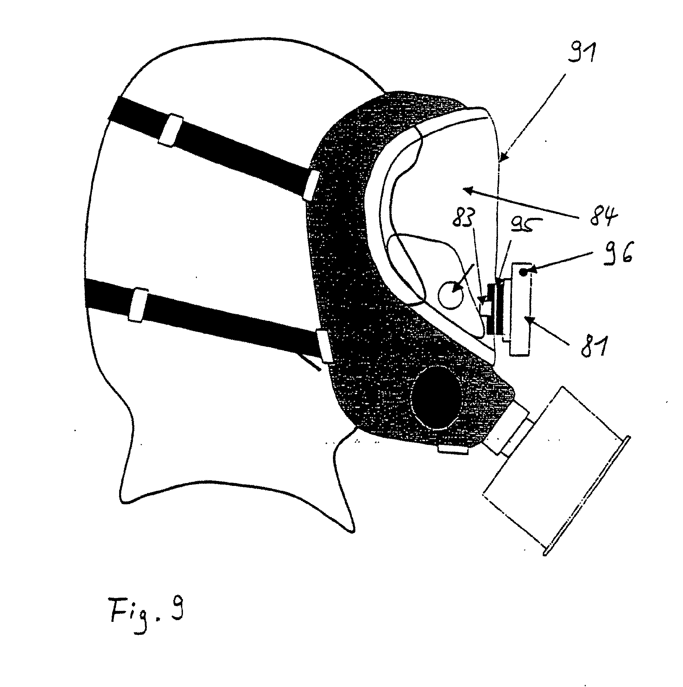

2. In den meisten Fällen verfügen Atemschutzmasken über eine Sichtscheibe 91 (Fig. 9) aus klarem durchsichtigem Kunststoff, die den größten Teil des Gesichtes überdeckt. In diesen Fällen kann ohne wesentliche Beeinträchtigung des Gesichtsfeldes am unteren Rand der Sichtscheibe diese so modifiziert werden, daß dort das Sensorsystem 81 angebracht werden kann. Der Sensor 83 ist dabei über eine nach außen gasdichte Öffnung mit dem Augenraum 84 der Maske gastechnisch verbunden. Die Befestigung des Sensorsystems (Sensor + Elektronik) erfolgt dabei ebenfalls über gasdichte Schraubgewinde 95, gasdichten Bajonettverschluß oder andere, dem Fachmann bekannte, ohne Werkzeug leicht zu lösende, gasdichte Befestigungen.

Die mit dem Sensorsystem 81 verbundenen optischen Funktions- und Warneinrchtungen (z.B. LED) 96 können, da sie sich direkt im Gesichtsfeld befinden, sicher wahrgenommen werden. Vorteilhaft ist bei dieser Variante, daß bei Umrüstung einer vorhandenen Schutzmaske lediglich die Sichtscheibe gewechselt werden muß.

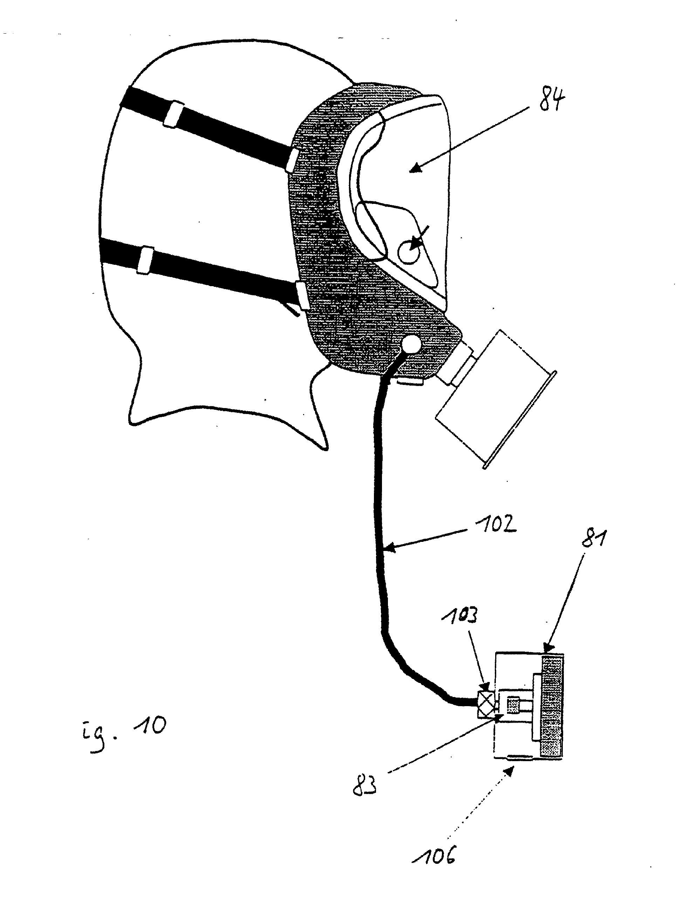

3. In Fällen, in denen eine Anbringung an der Sichtscheibe oder am unteren Rand der Atemschutzmasken nicht möglich oder nicht sinnvoll ist, kann wie in Fig. 10 angegeben, das Sensorsystem 81 auch abgesetzt von der Schutzmaske getragen werden, z.B. an den Verschlußriemen der Atemschutzmaske am Hinterkopf oder am Gürtel des Geräteträgers. Die gastechnische Verbindung zwischen Augenraum 84 und Sensor 83 erfolgt dabei zweckmäßig z.B. über eine nach außen gasdichte flexible Schlauchverbindung 102. Der Gastransport vom Augenraum zum Sensor kann über Diffusion erfolgen. Dies hat jedoch den Nachteil einer unter Umständen erheblichen zeitlichen Verzögerung zwischen Auftreten eines Schadstoffes im Augenraum und der Detektion durch das Sensorsystem. Es wird daher erfindungsgemäß ergänzend vorgeschlagen, daß der Gastransport zwischen Augenraum und Sensor über einen elektrisch betriebenen kleinen Ventilator 103 erfolgt oder mit Hilfe einer Membranpumpe, die über die bei der natürlichen Atmung auftretenden Druckdifferenzen angetriebene wird. Eine solche über Druckdifferenzen angetriebene Membranpumpe kann vom Fachmann leicht angegeben werden. Die zum Sensor geförderte Luft wird entweder über ein Klappenventil 106 an die Außenluft abgegeben oder über eine weitere Schlauchverbindung in den Augenraum zurückgeführt.

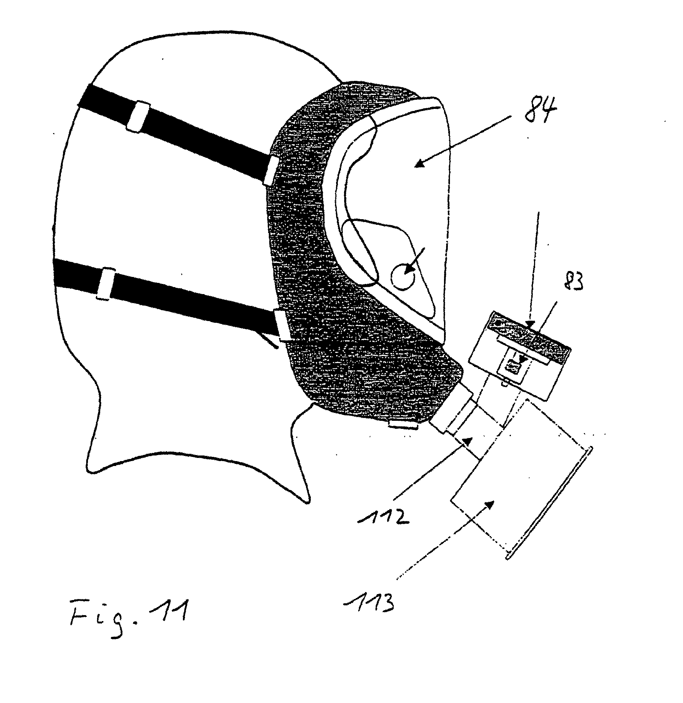

4. Alternativ kann das Sensorsystem auch in einem Adapter 112 zwischen Filter 113 und Maske angebracht werden (Fig. 11), hierbei ist jedoch zu beachten, daß das üblicherweise zwischen Filter und Maske innerhalb des Anschlußgewindes in der Maske befindliche Klappenventil filterseitig in den Adapter 112 integriert wird. Dies ist zwingend erforderlich, da ansonsten keine Undichtigkeiten der Maske selbst erkannt werden können. Der Gastransport vom Augenraum 84 zum Sensor 83 über Diffusion ist durch diese Maßname gewährleistet, ohne das die sonstigen Funktionen der Maske beeinträchtigt sind.

Die Signalisierung von in die Maske, eindringenden Schadstoffen erfolgt erfindungsgemäß optisch, z.B. über Lichtquellen bevorzugt verschiedenfarbige LED. Alternativ oder ergänzend kann ein Alarm auch akustisch z.B. mit Hilfe von Schallwandlern erfolgen. Für den Einsatz, in denen die akustische oder optische Wahrnehmungsfähigkeit des Geräteträgers eingeschränkt ist, wird die Verwendung von Reizströmen vorgeschlagen, die zwar medizinisch unbedenklich sind, dem Geräteträger aber dennoch einen Alarm zuverlässig signalisieren.

Da das Sensor-Mikrosystem u.a. einen integrierten Mikroprozessor und andere elektronische Komponenten enthält, ist es denkbar, daß das System durch starke elektromagnetische Strahlung oder andere Störeinflüsse derart beeinträchtigt wird, daß eine ordnungsgemäße Funktion nicht mehr sichergestellt ist. Erfindungsgemäß werden daher die für die Funktion wesentlichen Parameter des Systems überwacht. Bei bestimmungsgemäßer Funktion wird dies durch eine sich ändernde optische Anzeige z.B. bevorzugt eine blinkende, farbige LED angezeigt. Die Ansteuerung der optischen Anzeige erfolgt dabei direkt vom integrierten Mikroprozessor. Dies hat den Vorteil, daß durch das Blinken der Anzeige auch der Prozessor selbst überwacht wird.

Es sind aber auch Situationen denkbar, in denen eine Alarmsignalisierung an den Geräteträger allein nicht ausreichend ist. Dies ist z.B. möglich bei plötzlich auftretenden hohen Schadstoffkonzentrationen in der Atemluft, die den Geräteträger handlungsunfähig machen. Diese Situation kann z.B. Auftreten, wenn in einer Umgebung mit hoher Schadstoffkonzentration die Atemschutzmaske unbeabsichtigt vom Gesicht entfernt wird. Für diese Fälle wird erfindungsgemäß vorgeschlagen, die Daten des Sensor-Mikrosystems (ordnungsgemäße Funktion, Gaskonzentration in der Atemluft, Alarmsignal) über eine drahtlose Datenfernverbindung, z.B. eine digital kodierte Funkverbindung an eine Zentrale zu übermitteln. Zur Fernüberwachung mehrerer Maskenträger mit Sensorsystem, können die Signale einzelner Systeme zur Unterscheidung ebenfalls unterschiedlich digital kodiert sein.

Häufig ist es erforderlich, eventuell aufgetretene Schadstoffbelastungen des Geräteträgers im nachhinein zu rekonstruieren z.B. nach Arbeitsunfällen. Für diese oder ähnliche Fälle wird erfindungsgemäß vorgeschlagen die relevanten Sensordaten (z.B. ordnungsgemäße Funktion, Gaskonzentration in der Atemluft, Alarmsignal) während der Betriebszeit des Sensorsystems in einem Digitalspeicher zu speichern (vergleichbar mit der Black-Box bei Verkehrsflugzeugen). Im Bedarfsfall können diese dann nachträglich ausgewertet werden.

Für eine weitere Ausführungsvariante der Atemschutzmaske mit Sensor-Mikrosystem ist erfindungsgemäß vorgesehen, bei Vorliegen hoher Schadstoffkonzentrationen in der Atemluft des Geräteträgers, auf einen zweiten Filter umzuschalten. Dies ist jedoch nur sinnvoll, wenn die erhöhte Schadstoffkonzentation durch ein erschöpftes Filter bedingt ist. Für zusätzliche Sicherheit auch in Fällen, in denen eine plötzliche Undichtigkeit der Maske auftritt ist erfindungsgemäß vorgesehen bei Vorliegen erhöhter Schadstoffkonzentrationen automatisch ein Ventil zu öffnen, das die Innenmaske mit Luft oder reinem Sauerstoff belüftet. Der erhöhte Druck treibt dabei die belastete Luft nach außen und ermöglicht dem Geräteträger, den belasteten Bereich zu verlassen oder andere Schutzmaßnahmen vorzunehmen. Die Luft oder der reine Sauerstoff stammt aus einem geeigneten Druckbehälter, der außen an der Maske angebracht ist.

Als sicherheitserhöhendes Merkmal ist ergänzend vorgesehen, die Maske mit einem zusätzlichen Sensor auszustatten, der die Luftqualität auch außerhalb der Maske überwacht. Bei Vorliegen vorgegebener Schadstoffkonzentrationen in der Außenluft kann so ein sogenannter Vor-Alarm signalisiert werden, der den Maskenträger zu erhöhter Aufmerksamkeit und Vorsicht auffordert.

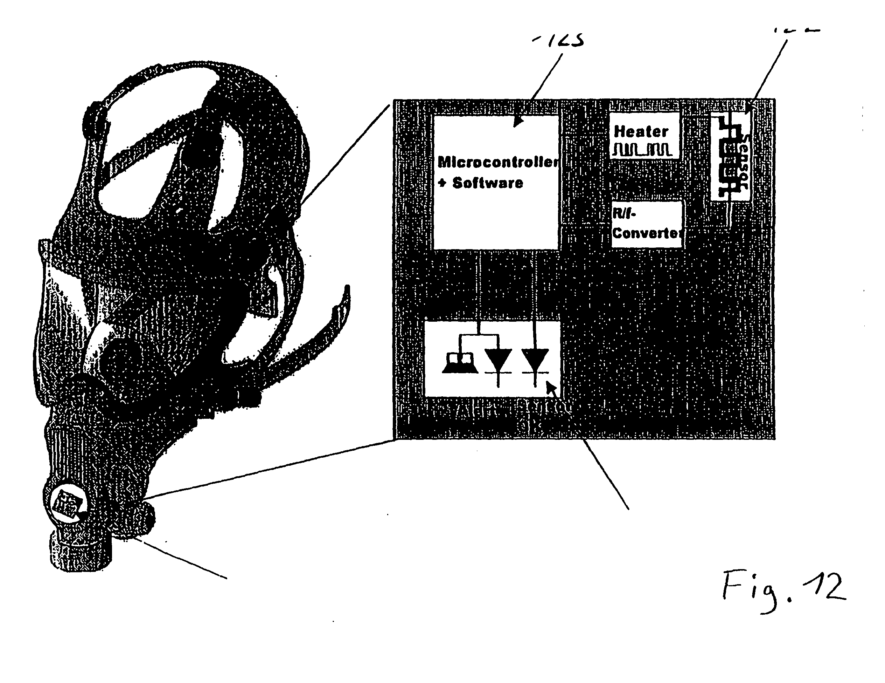

Das zur Detektion von in die Maske eindringenden Schadstoffen bevorzugt zu verwendende Sensorsystem ist ein Mikrosystem, bestehend aus den Komponenten Metalloxid-Sensor 122, Elektronik, Mikroprozesor mit integrierter Software 123 zur Steuerung und Auswertung des Sensorelementes (Fig. 12). Der Sensor ist bevorzugt auf einem gemeinsamen Trägersubstrat montiert, auf welcher sich die Komponenten für Analog-Digitalwandlung, Signalverarbeitung und Heizungssteuerung befinden.

Gewerbliche Anwendbarkeit:

Die Erfindung ist z.B. gewerblich anwendbar zur Überwachung von Atemschutz-Ausrüstungen, z.B. Atemschutz-Masken, zur Überwachung explosionsgefährdeter Gas-Luftgemische, zur Ermittlung der Qualität von Luft zum Zwecke der situationsadaptierten Beeinflussung von Lüftungen jeder Art und zur Überwachung der Atemluft in geschlossenen Räumen und im Freien.

Liste der Bezugszeichen:

| | |
|---|---|
| 11 | Sensorelement |
| 12 | Außenwiderstand |
| 13 | zentrales Steuer- und Regelgerät |
| 14 | Steuerleitung |
| 15 | Schaltbaustein |
| 16, 18 | erster, zweiter A/D-Wandler |
| 21 | Heizimpulse |
| 22 | stromloses Zeitintervall |
| 31 | Sensorsubstrat |

| 32 | Heizstruktur |
|---|---|
| 33 | sensitive Schicht |
| 40 | Gehäuse |
| 44 | Anschlußdrähte |
| 45 | Gehäuseboden |
| 47 | Diffusionsschicht |
| 48 | Gehäusemantel |
| 49 | Glasschicht |
| 51 | aktuelles Sensorsignal |
| 52 | Referenzsignal |
| 53,54 | Ereignisse |
| 60a | anfängliches Sensorsignal |
| 60b | anfängliche Heizleistung |
| 62 | konstante Heizleistung |
| 63 | Heizleistung mit Störgrößen-Aufschaltung |
| 64 | Sensorsignal bei Gasimpuls und nachgeführter Heizung |
| 65 | Sensorsignal bei Feuchteimuls und nicht nachgeführter Heizung |
| 66 | Sensorsignal bei Feuchteimuls und nachgeführter Heizung |
| 67 | Sensorsignal bei konstanter Heizleistung |
| 68 | Sensorsignal bei Gasimpuls und nicht nachgeführter Heizung |
| 71 | Sensor-Normpegel |
| 72 | Reaktion des Sensorsignal auf Gasimpuls |
| 73 | Zeitdauer des "stillen Voralarms" |
| 74 | Zeitdauer des Schaltsignals |
| 75 | Reaktion des Sensorsignals auf Feuchteimpuls |
| 80 | Ansatzstück |
| 81 | Sensorsystem |
| 82 | Außenhaut |
| 83 | Sensor |
| 84 | Augenraum |
| 85, 86 | ventilgesteuerte Luftführung |
| 87 | Bajonettanschluß |
| 91 | Sichtscheibe |
| 95 | Gasdichtes Schraubgewinde |
| 96 | Funktionsanzeige- und Warneinrichtung |
| 102 | Schlauchverbindung |
| 103 | Kleinventilator |
| 106 | Klappenventil |
| 112 | Adapter |
| 113 | Filter |
| 122 | Metalloxid-Sensor |
| 123 | Mikrokontroler mit Software |

**Patentansprüche**

1. Verfahren zum Betreiben eines Sensorelementes zur Detektion von in Luft enthaltenen Gasen oder Dämpfen, welches eine gassensitive Schicht aufweist und mittels einer Heizstruktur elektrisch beheizbar ist, wobei die Temperatur des Sensorelementes (11) geregelt wird, und der Temperatursollwert in Abhängigkeit von der Größe oder dem zeitlichen Verhalten des Sensorsignals mittels einer Störgrößenaufschaltung zumindest zeitweise verändert wird,

**dadurch gekennzeichnet,**

**dass** die Temperatur der gassensitiven Schicht (33) nicht konstant gehalten wird, sondern in Abhängigkeit vom zeitlichen Verhalten des Sensorsignals eine die Temperatur der gassensitiven Schicht (33) erhöhende Störgrößenaufschaltung so erfolgt, dass anhand des zeitlichen Verhaltens des Sensorsignals solche Störeinflüsse, welche durch Änderungen der physikalischen Umgebungsbedingungen verursacht sind, von solchen Einflüssen, welche durch eine Änderung der Gaszusammensetzung oder Gaskonzentration verursacht sind, unterscheidbar sind und mittels der Störgrößenaufschaltung die Heizleistung durch das Sensorsignal kurzzeitig so beeinflusst wird, dass eine Änderung des Sensorsignals, welche durch eine Änderung der Luftfeuchte oder einer Änderung der Lufttemperatur verursacht wird, schneller und/oder in einem stärkeren Ausmaß kompensiert wird als eine Änderung des Sensorsignals, welche durch eine Änderung der Gaskonzentration verursacht wird.

2. Verfahren nach Anspruch 1, **dadurch gekennzeichnet,**
**dass** eine Änderung des Sensorsignals, die durch eine Änderung der Luftfeuchte oder einer Änderung der Lufttemperatur verursacht wird, von einer Änderung des Sensorsignals, die durch eine Änderung der Gaskonzentration verursacht wird, anhand des jeweils unterschiedlichen zeitlichen Verhaltens des Sensorsignals unterscheidbar ist.

3. Verfahren nach Anspruch 1 oder 2, **dadurch gekennzeichnet,**
**dass** die Unterscheidung zwischen Änderung des Sensorsignals, die durch eine Änderung der Luftfeuchte oder einer Änderung der Lufttemperatur verursacht wird, und einer Änderung des Sensorsignals, die durch eine Änderung der Gaskonzentration verursacht wird, mittels geeigneter Software automatisch erfolgt.

4. Verfahren nach Anspruch 1, **dadurch gekennzeichnet,**
**dass** aus zeitlich zurückliegenden Sensorsignalen ein Mittelwert gebildet und aus diesem ein zur Auslösung eines Schaltsignals heranziehbarer Referenzwert für das jeweils aktuelle Sensorsignal gebildet wird, wobei für den Zeitraum der Störgrößenaufschaltung die Mittelwertbildung ausgesetzt wird.

5. Verfahren nach Anspruch 4, **dadurch gekennzeichnet, dass** zur Bildung des Referenzwertes die Kennlinie des Sensorelementes berücksichtigt wird.

6. Verfahren nach Anspruch 4, **dadurch gekennzeichnet,**
**dass** zur Detektion oxidierbarer Luftinhaltsstoffe für den Zeitraum, in dem der aktuelle Sensorwert kleiner als der aus dem Mittelwert gebildete Referenzwert ist, die Mittelwertbildung aussetzt und der alte Referenzwert beibehalten wird.

7. Verfahren nach Anspruch 4, **dadurch gekennzeichnet,**
**dass** zur Detektion reduzierbarer Luftinhaltsstoffe für den Zeitraum, in dem der aktuelle Sensorwert größer als der aus dem Mittelwert gebildete Referenzwert ist, die Mittelwertbildung aussetzt und der alte Referenzwert beibehalten wird.

8. Verfahren nach Anspruch 7, **dadurch gekennzeichnet, dass** der zur Bildung des Mittelwertes berücksichtigte Mittelungszeitraum variabel ist.

9. Verfahren nach Anspruch 4, **dadurch gekennzeichnet, dass** die Bildung des Referenzwertes durch Berücksichtigung zeitlich vorausgegangener Sensorsignale oder zeitlich vorausgegangener Referenzwerte erfolgt, wobei die Länge des hierbei berücksichtigten Zeitraumes variabel ist.

10. Verfahren nach einem der Ansprüche 8 bis 9, **dadurch gekennzeichnet,**
**dass** die Länge des berücksichtigten Zeitraumes vom zeitlichen Verhalten des Sensorsignals abhängt.

11. Verfahren nach Anspruch 4, **dadurch gekennzeichnet, dass** das Sensorsignal zugleich über zwei unterschiedliche Zeiträume gemittelt wird, wobei von dem über den längeren Zeitraum gebildeten Mittelwert ein bestimmter Betrag abgezogen wird und ein Schaltsignal ausgelöst wird, wenn der über den kürzeren Zeitraum gebildete Mittelwert kleiner wird als der sich durch Mittelung über den längeren Zeitraum und Abzug des bestimmten Betrages ergebende Wert.

12. Verfahren nach Anspruch 1, **dadurch gekennzeichnet,**
**dass** die Temperatur der Heizstruktur periodisch vorübergehend erhöht wird und die Sensorsignale vor, während und nach jeder Temperaturerhöhung zur qualitativen Ermittlung einer Anwesenheit zusätzlicher oxidierbarer bzw. reduzierbarer Luftinhaltsstoffe verglichen werden.

13. Verfahren nach Anspruch 1, **dadurch gekennzeichnet, dass** entweder die Änderung der Impedanz der gassensitiven Schicht (33) oder die Änderung des elektrischen Widerstandes zur Bildung eines Sensorsignals benutzt wird.

14. Verfahren nach Anspruch 4, **dadurch gekennzeichnet**

**dass** für den Referenzwert zusätzlich eine untere Schranke festgelegt ist, welche der Referenzwert niemals unterschreiten kann und welche durch sensorbedingte Schwankungen nicht erreicht wird, wobei die Gaskonzentration, die diesem Sensorsignal zugeordnet werden kann, keine dauerhaften Schäden auf den Menschen hat bzw. sich im Falle einer z.B. Überwachung von Explosionsgrenzen in weitem Sicherheitsabstand zur Explosionsgrenze befindet.

**Claims**

1. A method for operating a sensor element for the detection of gases or fumes present in the air, that has a gas-sensitive layer and that can be heated electrically by means of a heating structure, whereby the temperature of the sensor element (11) is regulated and the temperature setpoint is changed, at least temporarily, as a function of the magnitude of the sensor signal or of the behavior of the sensor signal over time by means of a disturbance variable feed-forward,
**characterized in that**
the temperature of the gas-sensitive layer (33) is not kept constant but rather, as a function of the behavior of the sensor signal over time, a disturbance variable feed-forward that increases the temperature of the gas-sensitive layer (33) takes place in such a way that, on the basis of the behavior of the sensor signal over time, such disturbance influences that are caused by changes in the physical ambient conditions can be distinguished from those influences that are caused by a change in the gas composition or in the gas concentration and, by means of the disturbance variable feed-forward, the heating output is briefly influenced by the sensor signal in such a way that a change in the sensor signal caused by a change in the humidity or in the air temperature is compensated for more quickly and/or to a greater extent than a change in the sensor signal caused by a change in the gas concentration.

2. The method according to Claim 1, **characterized in that**
a change in the sensor signal caused by a change in the humidity or in the air temperature can be distinguished from a change in the sensor signal caused by a change in the gas concentration, each time on the basis of the different behavior of the sensor signal over time.

3. The method according to Claim 1 or 2, **characterized in that**
suitable software is employed to automatically distinguish between a change in the sensor signal caused by a change in the humidity or in the air temperature and a change in the sensor signal caused by a change in the gas concentration.

4. The method according to Claim 1, **characterized in that**
a mean value is formed on the basis of sensor signals that lie in the past and, on the basis of this mean value, a reference value that can be used to trigger a switching signal is formed for each currently present sensor signal, whereby the mean value formation is discontinued for the period of time of the disturbance variable feed-forward.

5. The method according to Claim 4, **characterized in that**,
in order to form the reference value, the characteristic line of the sensor element is taken into consideration.

6. The method according to Claim 4, **characterized in that**,
in order to detect oxidizable constituents in the air for the time period in which the currently present sensor value is less than the reference value formed from the mean value, the mean value formation is discontinued and the old reference value is retained.

7. The method according to Claim 4, **characterized in that**
in order to detect reducible constituents in the air for the time period in which the currently present sensor value is more than the reference value formed from the mean value, the mean value formation is discontinued and the old reference value is retained.

8. The method according to Claim 7, **characterized in that**
the averaging period of time taken into consideration for the formation of the mean value is variable.

9. The method according to Claim 4, **characterized in that**
the reference value is formed by taking into consideration preceding sensor signals or preceding reference values, whereby the length of the period of time taken into consideration here is variable.

10. The method according to either of Claims 8 or 9, **characterized in that** the length of the period of time taken into account depends on the behavior of the sensor signal over time.

11. The method according to Claim 4, **characterized in that**
the sensor signal is concurrently averaged over two different periods of time, whereby a certain amount is subtracted from the mean value determined over the longer period of time and a switching signal is triggered when the mean value formed over the shorter period of time is smaller than the value resulting from the averaging over the longer period of time and from the subtraction of that certain amount.

12. The method according to Claim 1, **characterized in that**
the temperature of the heating structure is periodically increased temporarily and the sensor signals before, during and after each temperature increase are compared for purposes of a qualitative determination of the presence of additional oxidizable or reducible constituents in the air.

13. The method according to Claim 1, **characterized in that**
either the change in the impedance of the gas-sensitive layer (33) or the change in the electric resistance is used to form a sensor signal.

14. The method according to Claim 4, **characterized in that**
for the reference value, a lower threshold is additionally specified below which the reference value can never fall and that is not reached by sensor-related fluctuations, whereby the gas concentration that can be associated with this sensor signal does not cause permanent damage to humans or, for example, in case of the monitoring of explosion limits, is at a considerable safety margin from the explosion limit.

**Revendications**

1. Procédé destiné au fonctionnement d'un élément capteur pour la détection de gaz ou de vapeurs contenus dans l'air, lequel présente une couche sensible au gaz et peut être chauffé électriquement au moyen d'une structure chauffante, la température de l'élément capteur (11) étant régulée, et la valeur de consigne de la température variant, tout du moins temporairement, en fonction de la grandeur ou du comportement dans le temps du signal du capteur, moyennant la mise en circuit d'une grandeur perturbatrice,
**caractérisé en ce que**
la température de la couche sensible au gaz (33) n'est pas maintenue constante, mais, en fonction du comportement dans le temps du signal du capteur, une mise en circuit d'une grandeur perturbatrice augmentant la température de la couche sensible au gaz (33) se produit de sorte que, à l'appui du comportement dans le temps du signal du capteur, il est possible de faire la distinction entre les influences perturbatrices qui sont causées par des modifications ambiantes d'ordre physique, et les influences qui sont causées par une modification de la composition du gaz ou de la concentration du gaz, et au moyen de la mise en circuit d'une grandeur perturbatrice, la puissance de chauffe est passagèrement influencée par le signal du capteur, de sorte qu'une modification du signal du capteur qui est causée par une modification de l'humidité de l'air ou une modification de la température de l'air, est compensée plus rapidement et/ou dans une plus forte mesure qu'une modification du signal du capteur qui est causée par une modification de la concentration de gaz.

2. Procédé selon la revendication 1, **caractérisé en ce que**
une modification du signal du capteur qui est causée par une modification de l'humidité de l'air ou par une modification de la température de l'air peut être différenciée d'une modification du signal du capteur à l'appui du comportement dans le temps du signal du capteur qui est respectivement différent.

3. Procédé selon l'une des revendications 1 ou 2, **caractérisé en ce que**
la différenciation entre la modification du signal du capteur qui est causée par une modification de l'humidité de l'air ou une modification de la température de l'air et une modification du signal du capteur qui est causée par une modification de la concentration du gaz se produit automatiquement au moyen d'un logiciel approprié.

4. Procédé selon la revendication 1, **caractérisé en ce que**
une valeur moyenne est formée à partir des signaux de capteur remontant à plus loin dans le temps, et à partir de cette valeur moyenne, est calculée une valeur de référence à laquelle on peut se rapporter pour déclencher un signal de commutation pour le signal de capteur actuel respectif, le calcul de la valeur moyenne étant interrompu pendant la période de temps de la mise en circuit de la grandeur perturbatrice.

5. Procédé selon la revendication 4, **caractérisé en ce que**
la courbe caractéristique de l'élément capteur est prise en considération pour la formation de la valeur de référence.

6. Procédé selon la revendication 4, **caractérisé en ce que**,
pour la détection de substances oxydables contenues dans l'air pour la période de temps dans laquelle la valeur de capteur actuelle est plus grande que la valeur de référence formée à partir de la valeur moyenne, le calcul de la valeur moyenne est interrompu et l'ancienne valeur de référence est maintenue.

7. Procédé selon la revendication 4, **caractérisé en ce que**,
pour la détection de substances réductibles contenues dans l'air pour la période de temps dans laquelle la valeur de capteur actuelle est plus grande que la valeur de référence formée à partir de la valeur moyenne, le calcul de la valeur moyenne est interrompu et l'ancienne valeur de référence est maintenue.

8. Procédé selon la revendication 7, **caractérisé en ce que**
la période considérée pour le calcul de la valeur moyenne est variable.

9. Procédé selon la revendication 4, **caractérisé en ce que**
la formation de la valeur de référence se produit en tenant compte des signaux de capteur antérieurs dans le temps ou des valeurs de référence antérieures dans le temps, la longueur de la période de temps considérée à cet effet étant variable.

10. Procédé selon l'une des revendications 8 ou 9, **caractérisé en ce que**
la longueur de la période de temps considérée dépend du comportement dans le temps du signal de capteur.

11. Procédé selon la revendication 4, **caractérisé en ce que**
la valeur moyenne du signal du capteur est formée à la fois à partir de deux périodes de temps différentes, une valeur définie étant soustraite de la valeur moyenne formée à partir de la période de temps la plus longue, et un signal de commutation étant déclenché lorsque la valeur moyenne formée à partir de la période la plus courte est plus petite que la valeur résultant du calcul de la valeur moyenne à partir de la période de temps la plus longue et de la soustraction de la valeur définie.

12. Procédé selon la revendication 1, **caractérisé en ce que**
la température de la structure chauffante est périodiquement passagèrement augmentée et les signaux de capteur sont comparés avant, pendant et après chaque augmentation de la température pour la détermination qualitative d'une présence d'autres substances oxydables ou réductibles contenues dans l'air.

13. Procédé selon la revendication 1, **caractérisé en ce que**
pour la formation d'un signal de capteur, l'on utilise ou bien la modification de l'impédance de la couche sensible au gaz (33) ou bien la modification de la résistance électrique,

14. Procédé selon la revendication 4, **caractérisé en ce que**
pour la valeur de référence, une limite inférieure est fixée en plus, au-dessous de laquelle la valeur de référence ne doit jamais descendre et qui n'est jamais atteinte par des fluctuations dues au capteur, la concentration en gaz pouvant être assignée à ce signal de capteur ne causant aucun dommage durable sur l'être humain ou se trouvant par exemple, en cas de surveillance de limites d'explosion, dans une large marge de sécurité par rapport à la limite d'explosion.

Fig. 1

Sensortemperatur ok

Sensortemperatur zu niedrig

Fig. 2

X

25°C

33

$T_S < 350°C$

350°C

T/°C

31

32

Fig. 3

40

47

48

45

49

11

44

Fig. 4

**Fig. 5**

**Fig. 6**

Gasimpuls

Feuchteimpuls

Signal

Gasimpuls          Feuchteimpuls

Fig. 7

Fig. 89

Fig. 86

Fig. 9

84

102

103

81

83

106

ig. 10

84

83

112

113

Fig. 11

Fig. 12

Sensor

Heater

RI-
Converter

Microcontroller
+ Software